# EUROPÄISCHE PATENTANMELDUNG

(11) **EP 4 624 339 A1**
(43) Veröffentlichungstag der Anmeldung: **01.10.2025**
(21) Anmeldenummer: 24220390.9
(22) Anmeldetag: 16.12.2024
(51) Int. Cl.: B64G 1/10, B64G 1/64

(54) **VORRICHTUNG ZUM ENTGEGENWIRKEN GEGEN EIN ZIELOBJEKT IM WELTRAUM, SYSTEM UND VERWENDUNG DER VORRICHTUNG**

(30) Priorität: 27.03.2024 DE 102024001000
(71) Anmelder: MBDA Deutschland GmbH, 86529 Schrobenhausen (DE)
(72) Erfinder: NEBEL, Florian, 85298 Scheyern (DE)
(74) Vertreter: Isarpatent

(57) **Zusammenfassung**

Die vorliegende Erfindung betrifft Vorrichtung (100) zum Entgegenwirken gegen ein Zielobjekt (500) im Weltraum, aufweisend wenigstens einen Raumflugkörper (110), der dazu eingerichtet ist, sich basierend auf Zieldaten dem Zielobjekt (500) anzunähern, und einen Effektor (120, 120', 120", 120‴, 120ʺʺ, 120‴ʺ), der von dem Raumflugkörper (110) tragbar oder getragen ist und dazu eingerichtet ist, von dem Raumflugkörper (110) aus das Zielobjekt (500) einzufangen oder an das Zielobjekt (500) anzukoppeln. Zudem betrifft die Erfindung die Verwendung einer solchen Vorrichtung (100) und ein System mit einer solchen Vorrichtung (100).

## Beschreibung

### TECHNISCHES GEBIET DER ERFINDUNG

Die vorliegende Erfindung betrifft eine Vorrichtung zum Entgegenwirken gegen ein Zielobjekt im Weltraum. Zudem betrifft die vorliegende Erfindung ein System zum Entgegenwirken gegen ein Zielobjekt im Weltraum. Des Weiteren betrifft die Erfindung die Verwendung der Vorrichtung zum Entgegenwirken gegen ein Zielobjekt im Weltraum und/oder Unschädlichmachen eines Zielobjekts im Weltraum.

### HINTERGRUND DER ERFINDUNG

Weltrauminfrastruktur, die beispielsweise zur Satellitenkommunikation und - navigation, zur Erdbeobachtung, oder dergleichen dienen kann, wird mittlerweile umfangreich von technischen Systemen genutzt und kann demensprechend als kritische, d.h. besonders bedeutende bzw. schützenswerte, Infrastruktur erachtet werden. Die Weltrauminfrastruktur, wie etwa Satelliten, Raumstationen oder dergleichen, kann jedoch Bedrohungen ausgesetzt sein. Neben herumfliegenden Weltraumschrott kann eine solche Bedrohung auch durch militärische Mittel oder andere Störer gegeben sein. Es besteht daher der Wunsch nach einer Möglichkeit, Bedrohungen für die Weltrauminfrastruktur zumindest zu verringern.

### ZUSAMMENFASSUNG DER ERFINDUNG

Aufgabe der Erfindung ist es, mit konstruktiv möglichst einfachen Mitteln eine möglichst effektive Möglichkeit zum Schutz von Weltrauminfrastruktur zu schaffen.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem ersten Aspekt wird eine Vorrichtung zum Entgegenwirken gegen ein Zielobjekt im Weltraum vorgeschlagen. Die Vorrichtung weist wenigstens einen Raumflugkörper auf, der dazu eingerichtet ist, sich basierend auf Zieldaten dem Zielobjekt anzunähern. Zudem weist die Vorrichtung wenigstens einen Effektor auf, der von dem Raumflugkörper tragbar oder getragen ist und dazu eingerichtet ist, von dem Raumflugkörper aus das Zielobjekt einzufangen und/oder an das Zielobjekt anzukoppeln.

Die vorgeschlagene Vorrichtung ermöglicht es mit konstruktiv einfachen Mitteln, einen effektiven Schutz für Weltrauminfrastruktur gegen eine Bedrohung zu schaffen, die durch das Zielobjekt gegeben sein kann. Die Vorrichtung kann so betrieben werden, dass mittels des Raumflugkörpers und/oder des Effektors das Zielobjekt zumindest teilweise oder vollständig funktionsunfähig oder anderweitig zumindest unschädlicher gemacht wird, so dass die durch das Zielobjekt bewirkte Bedrohung zumindest teilweise oder weitestgehend beseitigt wird. Durch das Einfangen des Zielobjekts und/oder durch das Ankoppeln an das Zielobjekt mittels des Effektors kann zumindest das Risiko verringert werden, durch das Entgegenwirken gegen das Zielobjekt zusätzlichen Weltraumschrott zu erzeugen. In anderen Worten kann die Vorrichtung dazu dienen, das Zielobjekt von einem Kurs auf die zu schützende Weltrauminfrastruktur abzubringen. Es ist beispielsweise auch möglich, das Zielobjekt mittels der Vorrichtung in eine für die zu schützende Weltrauminfrastruktur weniger bedrohliche oder nicht bedrohliche Umlaufbahn, d.h. Orbit, zu bringen. Es ist auch möglich, das Zielobjekt mittels der Vorrichtung gezielt abstürzen bzw. in die Erdatmosphäre eintreten zu lassen, was wiederrum kaum oder gar keinen zusätzlichen Weltraumschrott erzeugt.

Wie hierin verwendet, kann unter dem Raumflugkörper jeder weltraumtaugliche Flugkörper verstanden werden, der dazu eingerichtet ist, sich dem Zielobjekt im Weltraum anzunähern. Der Raumflugkörper kann beispielsweise ein Raumfahrzeug, eine Raumsonde, ein künstlicher Satellit, eine Rakete, oder dergleichen sein. Der Raumflugkörper kann eine weltraumtaugliche Struktur aufweisen, die zum Tragen des Effektors geeignet ist. Zudem kann der Raumflugkörper in zumindest einigen Weiterbildungen wenigstens eines der folgenden Mittel aufweisen: einen bordeigenen Antrieb, eine bordeigene Energieversorgung, ein bordeigenes Steuersystem, das dazu eingerichtet ist, den Raumflugkörper zu steuern und/oder zu manövrieren, eine bordeigene Recheneinrichtung, wie etwa einen Computer, Prozessor, oder dergleichen, ein Lagekontrollsystem, z.B. Attitude Determination and Control System (ACS), ein Kommunikationssystem, ein System zur Führung, Navigation und Steuerung, z.B. Guidance Navigation and Control (GNC), und/oder einen Suchkopf .

Der Raumflugkörper kann dazu eingerichtet sein, die Zieldaten zu empfangen, beispielsweise aus der Ferne, z.B. unter Nutzung eines Kommunikationssystems, von einem bordeigenen Datenspeicher, oder dergleichen. Die Zieldaten können basierend auf wenigstens einer Erfassungseinrichtung, wie etwa einem Sensor, einem Sensornetzwerk oder dergleichen, erzeugt werden und das Zielobjekt identifizierbar machen bzw. diesem zugeordnet sein. Die Zieldaten können basierend auf Beobachtungen aus dem Weltraum und/oder von der Erde aus erzeugt werden. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystems, z.B. C2 (Command & Control) erzeugt und/oder bereitgestellt werden. Die Zieldaten können beispielsweise auch einen Treffpunkt, Abfangpunkt oder dergleichen des Raumflugkörpers mit dem Zielobjekt angeben, der beispielsweise basierend auf Daten der Erfassungseinrichtung, z.B. auch unter Einbeziehung astronomischen Wissens, berechnet werden kann. Die Vorrichtung kann dazu eingerichtet sein, basierend auf den Zieldaten hin zu dem Zielobjekt zu manövrieren, z.B. die Geschwindigkeit und/oder Lage des Raumflugkörpers und/oder des Effektors an das Zielobjekt anzupassen. Alternativ oder zusätzlich dazu, kann die Vorrichtung auch dazu eingerichtet sein, das Zielobjekt basierend auf bordeigenen Mitteln, beispielsweise basierend auf einem bordeigenen Suchkopf, anzunähern. Das Annähern des Raumflugkörpers und/oder des Effektors an das Zielobjekt kann auf dem gleichen oder einem ähnlichen, z.B. nahen oder benachbarten, Orbit, d.h. Umlaufbahn, der Erde erfolgen, auf der sich das Zielobjekt befindet.

Wie hierin verwendet, kann unter dem Effektor jede Einrichtung verstanden werden, die dazu eingerichtet ist, dem Zielobjekt entgegenzuwirken, z.B. nach Art einer Waffe. Das Entgegenwirken kann beispielsweise auch ein Abfangen, Abwehren oder dergleichen des Zielobjekts umfassen. Das Zielobjekt kann beispielsweise auch ein militärisch genutztes Objekt sein. Der Effektor kann jede Einrichtung sein, die dazu eingerichtet ist, das Zielobjekt einzufangen und/oder an dieses anzukoppeln, um die Schädlichkeit des Zielobjekts für die zu schützende Weltrauminfrastruktur zumindest zu verringern oder das Zielobjekt zumindest im Wesentlichen unschädlich zu machen. Unter dem Ankoppeln des Raumflugkörpers und/oder des Effektors an das Zielobjekt kann beispielsweise verstanden werden, dass zwischen dem Raumflugkörper und/oder dem Effektor und dem Zielobjekt eine feste, z.B. kraftschlüssige, formschlüssige und/oder stoffschlüssige, Verbindung ausgebildet ist. Dementsprechend kann das Zielobjekt durch Manövrieren des Raumflugkörpers und/oder des Effektors mitbewegt werden, um das Zielobjekt beispielsweise von einem Kollisionskurs abzulenken. Das Ankoppeln an das Zielobjekt und/oder das Einfangen des Zielobjekts kann auch dazu dienen, die Funktionsfähigkeit des Zielobjekts zumindest einzuschränken, z.B. durch Abdecken, Blockieren, Behindern, usw. entsprechender Funktionskomponenten des Zielobjekts.

In einer Weiterbildung kann der Raumflugkörper einen Antrieb aufweisen. Der Antrieb kann dazu eingerichtet sein, den Raumflugkörper bei eingefangenem Zielobjekt oder bei Ankopplung an das Zielobjekt zu bewegen. Dies kann beispielsweise von einem ersten Orbit zu einem dazu unterschiedlichen, zweiten Orbit erfolgen. Beispielsweise kann der Antrieb als wenigstens ein Triebwerk oder ein anderes für den Weltraum geeignetes Antriebsmittel ausgeführt sein. Das Bewegen des Raumflugkörpers mitsamt Zielobjekt kann beispielsweise dazu dienen, das Zielobjekt mitzubewegen bzw. mitzunehmen, um dessen Flugbahn oder Orbit zu manipulieren.

Gemäß einer Weiterbildung kann der Effektor auch bei eingefangenem Zielobjekt oder bei Ankopplung an das Zielobjekt mit dem Raumflugkörper gekoppelt sein oder gekoppelt bleiben. Die Kopplung kann direkt sein, indem der Effektor an dem Raumflugkörper angeordnet und damit gekoppelt ist, z.B. daran angebracht, daran befestigt, oder dergleichen ist. Die Kopplung kann jedoch auch indirekt sein, beispielsweise durch wenigstens ein Zwischenelement, dass zwischen dem Effektor und dem Raumflugkörper angeordnet ist. Dadurch kann das Zielobjekt mit dem Raumflugkörper mitbewegt und/oder mitgenommen werden, um beispielsweise dessen Flugbahn oder Orbit zu manipulieren, zu verändern, usw.

In einer Weiterbildung kann der Effektor, oder auch nur ein Teil davon, von dem Raumflugkörper aus hin zu dem Zielobjekt ausbringbar sein. Das Ausbringen kann beispielsweise durch Auswerfen, Abschießen oder dergleichen erfolgen. Beispielsweise kann sich der Raumflugkörper auf einem geeigneten Orbit dem Zielobjekt annähern, seine Geschwindigkeit ggf. an das Zielobjekt anpassen und dann den Effekt in Richtung des Zielobjekts ausbringen.

Gemäß einer Weiterbildung kann der Effektor ein Flächengebilde aufweisen. Das Flächengebilde kann dazu eingerichtet sein, das Zielobjekt zumindest teilweise zu umschließen. Beispielsweise kann das Flächengebilde als Netz, d.h. mit Maschen oder Öffnungen, als Tuch, Folie, oder dergleichen ausgeführt sein. Das Flächengebilde kann dazu dienen, das Zielobjekt festzuhalten und das auf diese Weise eingefangene Zielobjekt auf eine Umlaufbahn zu ziehen, die zumindest die Bedrohung durch das Zielobjekt verringert. Beispielsweise kann dies zum Absturz des Zielobjekts führen, ggf. mitsamt Effektor. In zumindest einigen Ausführungsformen kann der Effektor auch vor dem Absturz von dem Raumflugkörper gezielt getrennt werden, z.B. durch Kappen einer Verbindung und/oder eines Zwischenelements.

In einer Weiterbildung kann der Effektor ein Netz aufweisen. Beispielsweise kann das Netz als Wurfnetz oder Schleppnetz ausgeführt sein. Das Netz kann dazu dienen, das Zielobjekt einzufangen, indem das Netz ausgebracht wird und das Zielobjekt zumindest teilweise umschließt. Die Maschengröße des Netzes kann so gewählt sein, dass Bruchstücke des Zielobjekts im Netz zurückgehalten werden, damit diese keine Gefahr für die Raumfahrt darstellen.

Gemäß einer Weiterbildung kann der Effektor ein Wurfnetz aufweisen. Das Wurfnetz kann mittels eines Auswurfmechanismus hin zu dem Ziel auswerfbar und dort mittels Seilzugs zusammenziehbar sein.

Beispielsweise kann das Wurfnetz auch als Vieleck ausgeführt sein. An den Ecken des Wurfnetzes können Gewichte angebracht sein. Es ist auch denkbar, das Wurfnetz als Stern oder in einer anderen Form auszuführen, wobei die Gewichte über z.B. ein Seil an den Ecken befestigt sind. Das Wurfnetz kann beispielsweise eine umlaufende Kordel aufweisen, auf der das Netz aufgefädelt ist, ähnlich zu einem Vorhang auf einer Stange. Die Gewichte sind am Netz befestigt, nicht an der Kordel. An einer Ecke kann der Beginn der Kordel an einer Öse befestigt sein, wobei durch diese Öse das andere Ende der Kordel gezogen und dann zum Schwerpunkt des Netzes geführt werden kann. Dort kann es mit einer weiteren Öse befestigt und erneut umgelenkt werden. Diese zweite Öse stellt eine Sollbruchstelle dar und reißt bei zu starker Krafteinwirkung ab, ohne das Netz zu beschädigen. Die Ecken des Netzes und/oder die Gewichte an diesen Ecken können in jeweiligen Startrohren angeordnet werden. Die Gewichte können beispielsweise kugelförmig ausgeführt sein. Auf einer dem Netz zugewandten Seite kann das jeweilige, formstabile Startrohr geschlitzt sein. Durch diesen Schlitz können die kugelförmigen Gewichte mit dem Netz verbunden sein. Beispielsweise kann ein Riegel mit Motor die Gewichte in ihrer Startposition arretieren. Die das Netz umschließende Kordel kann von den Startrohren aus nach hinten, d.h. zum Raumflugkörper hin, herausgeführt und auf eine Winde geführt sein. Die Winde kann beispielsweise von zwei gegenläufig drehenden Elektromotoren angetrieben werden. Vor dem Start des Wurfnetzes kann die Winde mit einem elektrisch angetriebenen Riegel arretiert sein. Bei Start des Wurfnetzes können die Riegel von Winde und Gewichten gelöst werden, wobei sich die Elektromotoren hierbei im Leerlauf befinden können. Durch Zünden von Gasgeneratoren in den Vorvolumen können sich diese mit Gas unter Druck füllen, wobei dieses über eine im Durchmesser auf die Anwendung optimierte Öffnung in einen Airbag eingeleitet werden kann. Der Airbag kann sich unter dem Gasdruck aufblasen, kann dabei seitlich durch das Startrohr begrenzt werden und so einen an der Vorderseite des Airbags angebrachten Treibspiegel nach vorne bewegen. Dies beschleunigt auch das Gewicht, das schließlich ausgestoßen wird, wobei der Airbag selbst an der Seite zum Vorvolumen fixiert ist und im Startrohr verbleiben kann. Um das Wurfnetz auseinanderzuziehen, können die Startrohrquerschnittsmittelpunkte an der Austrittseite weiter vom gemeinsamen Schwerpunkt entfernt sein, als dies in der Startposition der Fall ist. Dadurch kann eine vom Zentrum abgewandte Beschleunigungskomponente erzeugt werden, die das Netz aufspannt und der durch das Rückhohlseil wirkenden Kraft entgegenwirkt. Sobald das Wurfnetz nun auf das Zielobjekt trifft, bremst das Zielobjekt das Wurfnetz selbst ab, während sich die Gewichte um das Ziel herumbewegen, bis sie vom Wurfnetz zurückgehalten werden und dann bewirken, dass das Zielobjekt durch das Wurfnetz umschlungen wird.

Nachdem das Zielobjekt von dem Wurfnetz umschlossen ist, kann die Winde gestartet werden. Dadurch können Raumflugkörper und Zielobjekt entlang des Rückholseils aufeinander zugezogen werden. Die in der Mitte des Netzes angebrachte Öse kann so ausgeführt sein, dass sie dabei an ihrer Sollbruchstelle abreißt, so dass der Raumflugkörper zu der Ecke des Wurfnetzes gezogen wird, an der die Kordel beginnt. Sobald sich der Raumflugkörper nicht mehr weiter an das Zielobjekt annähern kann, zieht die Winde das Wurfnetz zu. Zu diesem Zeitpunkt kann die Funktionsfähigkeit des Ziels schon eingeschränkt sein, da das Wurfnetz z.B. ein Solarpaneel verdunkeln oder eine andere Funktionskomponente des Zielobjekts beeinträchtigen kann, wie z.B. Sensoren abdeckt, die Bewegung mechanischer Komponenten behindern, oder dergleichen. Die zusätzliche Masse des Raumflugkörpers kann beispielsweise das Drehmoment des eingefangenen Zielobjekts derart verändern, dass die Funktion von z.B. dessen ACS gestört wird. Durch das Zuziehen der Kordel können Anbauten vom Zielobjekt abbrechen und die Funktionsfähigkeit weiter reduzieren. Zudem besteht eine kraftschlüssige Verbindung zwischen dem Raumflugkörper und dem Zielobjekt. Durch den Antrieb kann der Raumflugkörper das Zielobjekt in einen Orbit bringen, der zum Absturz der verbundenen Objekte führen wird.

In einer Weiterbildung kann der Effektor ein Schleppnetz aufweisen. Das Schleppnetz kann mittels eines Auslegers von dem Raumflugkörper beabstandbar und/oder aufspannbar, z.B. entfaltbar, sein.

Das Schleppnetz kann beispielsweise mittels des Auslegers, einer Teleskopstange oder dergleichen mit dem Raumflugkörper gekoppelt sein. Dies kann im oder nahe des Schwerpunkts des Raumflugkörpers erfolgen, z.B. auch zwischen zwei Triebwerken des Raumflugkörpers. Das Schleppnetz, kann als Vieleck, z.B. Viereck, Rechteck, usw., ausgeführt sein. Vor Ausbringung des Schleppnetzes kann dieses, z.B. zusammengefaltet, innerhalb des Effektors verstaut sein. Das zusammengefaltete Schleppnetz kann, z.B. an seiner Unterseite, Gewichte an den Enden aufweisen. Das Schleppnetz kann eine umlaufende Kordel aufweisen, an der das Schleppnetz nicht fixiert ist. Auf dem Halteelement, Ausleger, der Teleskopstange oder dergleichen kann das Schleppnetz lose aufgereiht sein, wobei es an den Enden mit einer automatisch lösbaren Verbindung fixiert sein kann. Die Kordel kann über ein Rückholseil zu einer Winde geführt sein.

In Verwendung kann sich der Raumflugkörper mitsamt dem das Schleppnetz aufweisenden Effektor auf einem dem Zielorbit ähnlichen Orbit dem Zielobjekt mit leicht erhöhter Bahngeschwindigkeit annähern. Während der Annäherung kann das Schleppnetz ausgebracht werden. Hierzu kann zunächst das Halteelement, der Ausleger, die Teleskopstange oder dergleichen ausgefahren werden. Dabei kann die Winde entriegelt und die Motoren im Leerlauf sein. In diesem Zustand kann sich das Schleppnetz aufgrund der Haltepunkte, die z.B. vorne und hinten angeordnet sein können, zumindest teilweise, z.B. in seitliche oder horizontale Richtung, entfalten. Zum Entfalten in die andere Richtung, z.B. Hochrichtung oder vertikale Richtung, kann ein weiterer Mechanismus vorgesehen sein. Beispielsweise kann der Mechanismus zum weiteren Entfalten in oder an den Gewichten angeordnet sein. Es kann beispielsweise ein Triebwerk, z.B. Kaltgastriebwerk, ähnlich einer Steuerdüse eines Lagekontrollsystems vorgesehen sein, um über die Gewichte das Schleppnetz weiter zu entfalten. Vor dem Einfangen des Zielobjekts können die Haltepunkte des Schleppnetzes an dem ausgefahrenen Halteelement, Ausleger, Teleskopstange oder dergleichen gelöst und dieses wieder eingefahren werden.

Wenn der Raumflugkörper in Reaktion auf eine zuvor festgestellte Bedrohung gestartet wird, kann der Raumflugkörper und/oder der Effektor vor dem Start mit einem Netz, z.B. Wurfnetz oder Schleppnetz, mit einer für das Zielobjekt geeigneten Größe ausgerüstet werden. In der Folge kann das Schleppnetz das Zielobjekt zumindest teilweise umschließen, wobei der Raumflugkörper und/oder der Effektor mittels Seilwinde die Länge des Seils verkürzen kann, das eine Schlaufe formt. Das Schleppnetz kann sich auch schließen und damit das Zielobjekt vollständig umschließen. Durch Ziehen am Seil kann der Raumflugkörper zudem Kraft auf das Zielobjekt ausüben und es so in einen Orbit zwingen, der zum Absturz führt. Durch Konstruktion des Raumflugkörpers mit beispielsweise zwei Triebwerken kann der Abstand vom Seil zum Triebwerk so gewählt werden, dass es zu keiner Beschädigung des Seils durch die Abgase des Triebwerks kommt.

Gemäß einer Weiterbildung kann der Effektor ein biegeschlaffes, langgestrecktes Element aufweisen, das um das Zielobjekt herum wickelbar ist. Beispielsweise kann das Element als Seil, z.B. aus Kevlar oder dergleichen, Kabel, Kette oder dergleichen ausgeführt sein, wobei das Element an seinem dem Raumflugkörper und/oder Effektor abgewandten Ende zusätzlich wenigstens einen Haken aufweisen bzw. mit wenigstens einem Haken bewehrt sein kann. Es können auch mehrere Haken entlang des Elements angeordnet, z.B. auch in bestimmten oder gleichmäßigen Abständen.

Beispielsweise kann sich der Raumflugkörper auf dem Zielorbit dem Zielobjekt annähern und sich auf ähnlichem Orbit bewegen, entsprechend mit zumindest annähernd gleicher Geschwindigkeit. Das mit Haken bewehrte Seil kann in Richtung des Ziels abgelassen werden. Durch z.B. Rotation des Zielobjekts kann sich das Seil mit Haken an der Oberfläche des Zielobjekts verfangen und sich um diese wickeln. Über eine im Effektor verbaute Seilwinde, kann sich der Raumflugkörper selbst zum Zielobjekt heranziehen und so die Distanz zu diesem verlängern oder verkürzen. Dadurch kann eine Veränderung des Drehmoments des Zielobjekts bewirkt werden. Diese Veränderung des Drehmoments kann beispielsweise die Funktionsfähigkeit eines Lagekontrollsystems oder einer anderen Funktionskomponente des Zielobjekts beeinträchtigen. Dies kann beispielsweise bewirken, dass sich das Zielobjekt in einen Safe Mode begibt und/oder seine Mission beendet. Zudem kann das Seil selbst die Beweglichkeit von z.B. Solarpanelen des Zielobjekts einschränken, wodurch wiederum die Funktionsfähigkeit beeinträchtigt werden kann.

Zudem kann das biegeschlaffe, langgestreckte Element mittels eines Seilzugs, z.B. einer motorgetriebenen Winde, ausgebracht und/oder rückgeholt werden. Um beispielsweise ein ausgeglichenes Drehmoment zu ermöglichen, können zwei über z.B. Zahnräder gekoppelte Elektromotoren die Winde antreiben. Im Lagerzustand oder wenn ein Verändern der Seillänge nicht erwünscht ist, kann die Winde mit einem elektrisch betriebenen Riegel arretiert werden. Um zu verhindern, dass die Haken sich untereinander oder mit der Winde verhaken, können sich diese nur im unteren Bereich des Elements befinden und in einem Rohrstück in Verlängerung der Winde gelagert werden. Am Ende des Elements kann ein Gewicht angeordnet sein. Das Rohrstück kann verjüngt sein, damit das Gewicht nicht bis zur Winde gezogen werden kann. Zum Abwickeln des Elements kann der Raumflugkörper so in Rotation gebracht werden, dass die Zentrifugalkraft das Gewicht, und damit das Element nach draußen zieht. Die Rotation kann in unmittelbarer Nähe zum Zielobjekt durchgeführt werden. Die Motoren können im Leerlauf sein. Das Element kann in Kontakt mit dem Zielobjekt kommen, wobei sich das Zielobjekt am Element verhaken kann. Sobald sich das Zielobjekt weit genug in dem Element eingewickelt hat, kann die Position der Winde mittels des Riegels arretiert werden.

Optional kann der Effektor zusätzlich eine Harpune oder dergleichen aufweisen, die auf das Zielobjekt geschossen werden kann, um darüber einen weiteren Haltepunkt mit dem Zielobjekt auszubilden. Durch Verkürzen des biegeschlaffen Elements und eines Seils der Harpune kann eine kraftschlüssige Verbindung zwischen dem Raumflugkörper und dem Zielobjekt ausgebildet werden. Diese Verbindung kann beispielsweise dazu genutzt werden, den Orbit des Zielobjekts zu verändern, um einen Absturz des Zielobjekts zu bewirken. Beispielsweise kann die Harpune mittels eines Auswurfmechanismus, z.B. eines Startrohrs und Gasgenerators, auf das Zielobjekt geschossen werden. Im Transport- und/oder Lagerzustand kann die Harpune im Startrohr arretiert sein, beispielsweise durch einen Riegel, der von einem elektrischen Stellmotor angetrieben sein kann. Vor dem Abschuss der Harpune kann der Riegel gelöst und anschließend das Volumen zwischen Harpune und z.B. einer Blende mit der Führung für ein Seil der Harpune mit Gas aus dem Gasgenerator gefüllt werden. Die Winde kann zu diesem Zeitpunkt bereits entriegelt sein, wobei sich die Motoren der Winde im Leerlauf befinden können, so dass das Seil nahezu Widerstandsfrei abgewickelt werden kann. Durch den Gasdruck kann die Harpune aus dem Startrohr hin auf das Ziel beschleunigt werden. Dabei kann der Raumflugkörper ggf. in geringerem Maße in die Gegenrichtung beschleunigt werden. Um das Wiederherausziehen der Harpune aus dem Zielobjekt zu erschweren, kann die Harpune, z.B. an ihrem Schaft, Widerhaken aufweisen.

In einer Weiterbildung kann das biegeschlaffe, langgestreckte Element mittels eines Rückholmechanismus zu dem Raumflugkörper hin rückholbar sein. Der Rückholmechanismus kann beispielsweise eine Seilwinde oder dergleichen aufweisen. Der Rückholmechanismus kann motorgetrieben sein. Zudem kann der Rückholmechanismus wahlweise arretierbar sein.

Gemäß einer Weiterbildung kann der Effektor wenigstens ein speerförmiges Element aufweisen. Das speerförmige Element kann dazu eingerichtet sein, eine kraftschlüssige und/oder formschlüssige Kopplung mit dem Zielobjekt auszubilden. Beispielsweise kann das speerförmige Element mittels eines Auswurfmechanismus, z.B. eines Startrohrs und Gasgenerators, auf das Zielobjekt geschossen werden. Um das Wiederherausziehen des speerförmigen oder harpunenförmigen Elements aus dem Zielobjekt zu erschweren, kann das speerförmige Element, z.B. an seinem Schaft und/oder an seiner Spitze, Widerhaken aufweisen.

In einer Weiterbildung kann das speerförmige Element mittels Seilzug mit dem Raumflugkörper gekoppelt und/oder rückholbar sein. Der Seilzug kann motorgetrieben sein. Zudem kann der Seilzug eine Winde aufweisen. Der Seilzug kann auch arretierbar sein.

Gemäß einer Weiterbildung kann der Effektor einen Klammermechanismus aufweisen. Der Klammermechanismus kann dazu eingerichtet sein, das Zielobjekt zumindest teilweise zu umschließen, um dieses zu halten, und/oder das Zielobjekt zu schneiden. Beispielsweise kann der Klammermechanismus als Halteklammer oder als Schneidklammer ausgeführt sein, wobei die Halteklammer stumpf oder stumpfer sein kann als die Schneidklammer, die wenigstens eine Klinge, Schneide oder dergleichen aufweisen kann. Die Schneidklammer kann dazu dienen, zumindest teilweise in die Struktur des Zielobjekts einzudringen, um zumindest einen Teil davon zu umschließen und so eine kraftschlüssige Verbindung zwischen dem Raumflugkörper und/oder Effektor und dem Zielobjekt zu bewirken. Der Klammermechanismus kann beispielsweise motorgetrieben, z.B. elektrisch getrieben, oder pyrotechnisch getrieben ausgeführt sein. Mittels des Antriebs des Raumflugkörpers kann das Zielobjekt zur Unschädlichmachung bewegt werden. Die Schneidklammer kann auch bei groß bauenden Zielobjekten eingesetzt werden, da ein Umschließen der Struktur nicht erforderlich ist. Die Halteklammer kann sich an vielerlei Zielobjekten unterschiedlicher Größe und Form festhalten.

Beispielsweise kann der Klammermechanismus zwei Klammerelemente bzw. Schenkel aufweisen, die einen gemeinsamen Drehpunkt aufweisen. Ein am Drehpunkt angreifender Elektromotor kann die Klammerelemente zunächst von einer Parkposition in eine Reiseposition bewegen. Zum Schließen des Klammermechanismus kann beispielsweise ein Gasgenerator aktiviert werden, der ein auf wenigstens eines der Klammerelemente wirkendes Volumen vergrößert und das Klammerelemente dadurch betätigt bzw. beschleunigt. Durch ein Ventil am Übergang vom Gasgenerator zu dem Volumen kann der Druck in dem Volumen, und damit die Beschleunigung des Klammerelements, kontrolliert werden. Um dabei ein Zurückrutschen des Klammerelements zu verhindern, kann der Klammermechanismus beim Vorrücken, z.B. schrittweise, arretiert werden.

In einer Weiterbildung kann der Effektor einen Koppelabschnitt aufweisen. Der Koppelabschnitt kann dazu eingerichtet sein, das Zielobjekt zu kontaktieren und mit diesem eine haftende, optional stoffschlüssige, Kopplung auszubilden. Beispielsweise kann der Koppelabschnitt zumindest teilweise flächig ausgeführt sein und daher auch als z.B. Haftfläche oder Klebefläche bezeichnet werden. Die haftende Kopplung kann beispielsweise durch ein Geckomaterial, einen Klebstoff oder durch eine Kombination davon bewerkstelligt werden. Die haftende Kopplung kann eine feste Verbindung zwischen dem Raumflugkörper und/oder Effektor und dem Zielobjekt ausbilden, d.h. an diesem ankoppeln. Durch den Antrieb kann der Raumflugkörper das Zielobjekt in einen Orbit bewegen, der zum Absturz der miteinander verbundenen Objekte führt.

Gemäß einer Weiterbildung kann der Koppelabschnitt ein Geckomaterial aufweisen. Das Geckomaterial kann dazu eingerichtet sein, an dem Zielobjekt zu haften bzw. eine Haftwirkung zwischen dem Effektor und dem Zielobjekt auszubilden. Unter einem Geckomaterial kann ein Haftmittel verstanden werden, das auf einer Anpassung der Füße eines Geckos basiert. Das Geckomaterial kann auch als ein Trockenkleber verstanden werden. Beispielsweise kann das Geckomaterial Nanostrukturen, wie etwa Nanoröhrchen oder dergleichen, aufweisen, die die Wirkung der Füße eines Geckos nachahmen. Das Geckomaterial kann beispielsweise auch den Effektor oder einen Teil davon umlaufen. Beispielsweise kann das Geckomaterial einen Suchkopf umlaufen, um dessen Sichtfeld möglichst wenig einzuschränken. Die Haftverbindung zwischen dem Effektor und dem Zielobjekt dann durch Überwinden der Haftkraft wieder aufgehoben werden.

In einer Weiterbildung kann der Koppelabschnitt dazu eingerichtet sein, eine stoffschlüssige Verbindung mit dem kontaktierten Zielobjekt auszubilden. Dies kann beispielsweise durch einen Klebstoff oder ein anderes Adhäsiv bewerkstelligt werden.

Beispielsweise kann der Klebstoff in wenigstens eine Kapsel gefüllt sein, die beispielsweise durch Druck beim Kontaktieren des Zielobjekts zum Platzen gebracht werden können. Der Raumflugkörper kann sich auf einem dem Zielorbit ähnlichem Orbit dem Zielobjekt annähern. Zum Zeitpunkt des Aufschlagens des Raumflugkörpers, kann die Geschwindigkeitsdifferenz zwischen dem Zielobjekt und dem Raumflugkörper so gering gewählt werden, dass ein Durschlagen des Zielobjekts verhindert wird, aber groß genug, um die auf dem Koppelabschnitt angeordneten und mit Klebstoff gefüllten Kapseln zum Platzen zu bringen. Nach dem Platzen kann der Klebstoff den Zwischenspalt füllen und ggf. aushärten, z.B. unter kontinuierlichem Druck des mit seinem Antrieb schiebenden Raumflugkörpers. Dadurch kann der Raumflugkörper und/oder Effektor an das Zielobjekt ankoppeln.

Alternativ oder zusätzlich dazu, kann der Koppelabschnitt auch eine oder mehrere Vertiefungen aufweisen, in denen der Klebstoff angeordnet sein kann. Die jeweilige Vertiefung kann eine Öffnung aufweisen, durch die der Klebstoff heraustreten kann. Der Klebstoff kann auch ein Zweikomponentenklebstoff sein, der in einer Vorkammer gemischt und dann durch die jeweilige Öffnung heraustreten kann. Zum schnelleren Aushärten des Klebstoffs kann der Koppelabschnitt mittels einer Heizeinrichtung beheizbar sein.

Gemäß einer Weiterbildung kann der Effektor ferner wenigstens einen Manipulationsmechanismus aufweisen, der dazu eingerichtet ist, das kontaktierte Zielobjekt zu manipulieren. Beispielsweise kann mit oder nach Ausbilden der Haftverbindung oder Klebeverbindung wenigstens eine der folgenden Manipulationen des Zielobjekts ausgeführt werden: Festschrauben am Zielobjekt, Anbohren am Zielobjekt, um beispielsweise einen Gefechtskopf im Zielobjekt zu platzieren, Verändern der Rotationsgeschwindigkeit vom Zielobjekt, Verändern des Orbits des Zielobjekts, um dieses zum Absturz zu bringen. Die dafür evtl. zusätzlich erforderlichen Komponenten, z. B. Bohrer oder dergleichen, können beispielsweise in einem für missionsspezifische Nutzlast reservierten Volumen des Raumflugkörpers untergebracht sein. Je nach eingeschlagener Maßnahme kann das Zielobjekt temporär oder permanent von seiner Missionserfüllung abgehalten werden.

In einer Weiterbildung kann der Raumflugkörper wenigstens einen Suchkopf aufweisen. Der Raumflugkörper kann dazu eingerichtet sein, sich mittels des Suchkopfes zielgeführt an das Zielobjekt anzunähern. Suchköpfe und deren Funktion sind im vorliegenden technischen Gebiet bekannt, so dass eine genauere Beschreibung des Suchkopfes entbehrlich ist. Prinzipiell kann ein solcher Suchkopf einen oder mehrere Sensoren aufweisen, die auch als Sucher bezeichnet werden können. Mittels einer Steuereinrichtung können die Sensorinformationen in Steuerbefehle umgesetzt werden, mit denen die Flugrichtung des Raumflugkörpers beeinflusst werden kann. Der Suchkopf kann eine bordeigene Zielführung erlauben.

Ein zweiter Aspekt bezieht sich auf die Verwendung einer Vorrichtung zum Entgegenwirken gegen ein Zielobjekt im Weltraum und/oder Unschädlichmachen eines Zielobjekts im Weltraum. Dabei wird wenigstens ein Raumflugkörper, der wenigstens einen Effektor trägt, basierend auf einem Zielvorgabesignal dem Zielobjekt angenähert. Mittels des Effektors wird von dem Raumflugkörper aus das Zielobjekt eingefangen oder an das Zielobjekt angekoppelt.

Die Vorrichtung kann gemäß dem ersten Aspekt und dessen Weiterbildungen beliebig weitergebildet werden.

Gemäß einer Weiterbildung kann der Raumflugkörper von der Erde aus hin zu dem Zielobjekt gestartet und/oder verbracht werden. Hierzu kann eine Startvorrichtung und/oder eine Verbringungsvorrichtung vorgesehen sein, die zum Start und/oder Verbringen des Raumflugkörpers von Land, Wasser oder Luft eingerichtet sein kann. Damit kann der Raumflugkörper bei Bedarf, z.B. bei Bestimmung des Zielobjekts als potenzielle Bedrohung, von der Erde aus gestartet und/oder verbracht werden.

In einer Weiterbildung kann der Raumflugkörper als dedizierter Satellit im Weltraum vorgehalten und von dort aus dem Zielobjekt angenähert werden. Beispielsweise kann der Raumflugkörper und/oder der Effektor bereits in den Weltraum verbracht, bevor eine Bedrohung erkennbar ist bzw. ein konkreter Bedarf besteht. Dies kann mittels eines dedizierten Satelliten bewerkstelligt werden, der auch dazu eingerichtet sein kann, seine Bahn ggf. auch mehrfach zu wechseln oder mehrere Objekte auf einem Orbit zu schützen. Dies bildet eine Wachfunktion.

Gemäß einer Weiterbildung kann der Raumflugkörper von einem Satelliten getragen und von dort aus hin zu dem Zielobjekt gestartet werden. Beispielsweise können ein oder mehrere Raumflugkörper und/oder Effektoren an oder auf dem zu schützenden Satelliten installiert sein. Dabei können der Satellit und der Raumflugkörper und/oder der Effektor gemeinsam gestartet bzw. in den Weltraum verbracht werden. Dies bildet ein Selbstverteidigungssystem für den Satellit, wobei das Prinzip auch auf andere Weltrauminfrastruktur anwendbar ist.

In einer Weiterbildung kann der Raumflugkörper mittels eines bordeigenen Antriebs bei eingefangenem Zielobjekt oder bei Ankopplung an das Zielobjekt manövriert werden, um dadurch eine Umlaufbahn des Zielobjekts zu verändern. Dadurch kann die Bedrohung durch das Zielobjekt zumindest verringert werden.

Ein dritter Aspekt stellt ein System zum Entgegenwirken gegen ein Zielobjekt im Weltraum zur Verfügung. Das System weist wenigstens eine Erfassungseinrichtung auf, die dazu eingerichtet ist, das Zielobjekt zum Erzeugen von Zieldaten zu erfassen. Zudem weist das System wenigstens einen Raumflugkörper auf, der dazu eingerichtet ist, sich basierend auf Zieldaten dem Zielobjekt anzunähern. Des Weiteren weist das System wenigstens einen Effektor, der von dem wenigstens einen Raumflugkörper tragbar oder getragen ist und dazu eingerichtet ist, von dem wenigstens einen Raumflugkörper aus das Zielobjekt einzufangen oder an das Zielobjekt anzukoppeln.

Die wenigstens eine Erfassungseinrichtung kann wenigstens einen Sensor, ein Sensornetzwerk oder dergleichen aufweisen, die im Weltraum und/oder der Erde angeordnet sein können. Die auf der wenigstens einen Erfassungseinrichtung basierenden Zieldaten können basierend auf Beobachtungen aus dem Weltraum und/oder von der Erde aus erzeugt werden. Beispielsweise können die Zieldaten von einem Weltraumüberwachungssystem oder unter Nutzung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden.

Das System kann gemäß dem ersten Aspekt und/oder dem zweiten Aspekt und deren jeweiligen Weiterbildungen weitergebildet werden.

Gemäß einer Weiterbildung kann das System ferner eine Startvorrichtung und/oder eine Verbringungsvorrichtung aufweisen. Die Startvorrichtung und/oder Verbringungsvorrichtung kann dazu eingerichtet sein, den Raumflugkörper von der Erde aus hin zu dem Zielobjekt zu starten.

Beispielsweise kann der wenigstens eine Raumflugkörper in der Verbringungsvorrichtung durch die Startvorrichtung integriert werden. Die Startvorrichtung kann eine mechanische und/oder elektrische Schnittstelle und/oder eine Datenschnittstelle zwischen der Verbringungsvorrichtung und dem Raumflugkörper ausbilden. Optional kann vorgesehen sein, dass vor dem Start der Raumflugkörper von der Verbringungsvorrichtung, mit Energie versorgt wird. Die Startvorrichtung kann dazu ausgelegt sein, dass ein Suchkopf des Raumflugkörpers ein Sichtfeld aus der Startvorrichtung heraus hat. Dadurch kann der Suchkopf seine Daten, z.B. Bilddaten usw., an z.B. das C2 System zurückmelden, um Bedrohungen in Suchkopfreichweite zu erkennen und zu identifizieren. Es ist auch möglich, den Suchkopf bereits vor dem Start auf das Ziel aufzuschalten (Lock-on-before-launch). Die mechanische Schnittstelle kann den Raumflugkörper während der Verbringung bis zum Start arretieren. Beim Start kann die Arretierung, z.B. signalgesteuert, gelöst werden. Der Raumflugkörper kann dann mittels seines Antriebs aus der Startvorrichtung heraus beschleunigt werden.

In einer Weiterbildung kann das System ferner einen Satelliten aufweisen. Der Satellit kann dazu eingerichtet sein, den Raumflugkörper zu tragen, wobei der Raumflugkörper von dem Satelliten aus hin zu dem Zielobjekt startbar ist. Hierbei kann der Raumflugkörper und/oder der Effektor als Selbstverteidigungssystem für den Satellit dienen. Der Raumflugkörper und/oder der Effektor kann dort warten, bis das Zielobjekt in Reichweite ist und kann dann von dem Satellit aus gestartet werden.

Die oben beschriebenen Aspekte, Ausgestaltungen, Varianten und Beispiele können miteinander kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### KURZBESCHREIBUNG DER ZEICHNUNGEN

Im Folgenden wird die Erfindung unter Bezugnahme auf die Figuren der Zeichnungen erläutert. Von den Figuren zeigen:
- Fig. 1: schematisch eine exemplarische Vorrichtung mit Raumflugkörper und Effektor gemäß einem Ausführungsbeispiel.
- Fig. 2: schematisch eine exemplarische Vorrichtung mit Raumflugkörper und Effektor gemäß einem Ausführungsbeispiel.
- Fig. 3A: schematisch einen exemplarischen Effektor gemäß einem Ausführungsbeispiel.
- Fig. 3B: schematisch einen exemplarischen Effektor gemäß einem Ausführungsbeispiel.
- Fig. 4: schematisch einen exemplarischen Effektor gemäß einem Ausführungsbeispiel.
- Fig. 5: schematisch einen exemplarischen Effektor gemäß einem Ausführungsbeispiel.
- Fig. 6: schematisch einen exemplarischen Effektor gemäß einem Ausführungsbeispiel.
- Fig. 7: schematisch einen exemplarischen Effektor gemäß einem Ausführungsbeispiel.
- Fig. 8: schematisch einen exemplarischen Effektor gemäß einem Ausführungsbeispiel.
- Fig. 9: schematisch die Verwendung eines exemplarischen Effektors gemäß einem Ausführungsbeispiel.
- Fig. 10: schematisch eine exemplarische Vorrichtung mit Raumflugkörper und Effektor gemäß einem Ausführungsbeispiel.
- Fig. 11: schematisch einen exemplarischen Effektor gemäß einem Ausführungsbeispiel.
- Fig. 12: schematisch eine exemplarische Vorrichtung mit Raumflugkörper und Effektor bzw. deren Verwendung gemäß einem Ausführungsbeispiel.
- Fig. 13: schematisch einen exemplarischen Effektor gemäß einem Ausführungsbeispiel.
- Fig. 14: schematisch eine exemplarische Vorrichtung mit Raumflugkörper und Effektor gemäß einem Ausführungsbeispiel.
- Fig. 15: schematisch eine exemplarische Vorrichtung mit Raumflugkörper und Effektor gemäß einem Ausführungsbeispiel.
- Fig. 16: schematisch eine exemplarische Vorrichtung mit Raumflugkörper und Effektor gemäß einem Ausführungsbeispiel.
- Fig. 17: schematisch eine Verwendung einer exemplarischen Vorrichtung mit Raumflugkörper und Effektor gemäß einem Ausführungsbeispiel.
- Fig. 18: schematisch eine Verwendung einer exemplarischen Vorrichtung mit Raumflugkörper und Effektor gemäß einem Ausführungsbeispiel.
- Fig. 19: schematisch eine exemplarische Vorrichtung mit Raumflugkörper und Effektor gemäß einem Ausführungsbeispiel.
- Fig. 20: schematisch eine exemplarische Vorrichtung mit Raumflugkörper und Effektor gemäß einem Ausführungsbeispiel.
- Fig. 21: schematisch einen exemplarischen Effektor gemäß einem Ausführungsbeispiel.
- Fig. 22: schematisch eine exemplarische Vorrichtung mit Raumflugkörper und Effektor gemäß einem Ausführungsbeispiel.
- Fig. 23: schematisch eine Verwendung einer exemplarischen Vorrichtung mit Raumflugkörper und Effektor gemäß einem Ausführungsbeispiel.
- Fig. 24: schematisch eine exemplarische Vorrichtung mit Raumflugkörper und Effektor gemäß einem Ausführungsbeispiel.
- Fig. 25: schematisch eine exemplarische Vorrichtung mit Raumflugkörper und Effektor gemäß einem Ausführungsbeispiel.
- Fig. 26: schematisch einen Koppelabschnitt eines Effektors gemäß einem Ausführungsbeispiel.
- Fig. 27: schematisch eine Verwendung einer exemplarischen Vorrichtung mit Raumflugkörper und Effektor gemäß einem Ausführungsbeispiel.
- Fig. 28: schematisch eine Verwendung einer exemplarischen Vorrichtung mit Raumflugkörper und Effektor gemäß einem Ausführungsbeispiel.
- Fig. 29: schematisch ein exemplarisches System mit Raumflugkörper und Effektor gemäß einem Ausführungsbeispiel.
- Fig. 30: in einem Flussdiagramm mögliche Aktivitäten bezogen auf eine Vorrichtung und/oder einen Raumflugkörper in einer Startvorrichtung, gemäß einem Ausführungsbeispiel.
- Fig. 31: in einem Flussdiagramm einen möglichen Ablauf bei Verwendung eines Systems mit Raumflugkörper und Effektor gemäß einem Ausführungsbeispiel.

In den Figuren bezeichnen dieselben Bezugszeichen gleiche oder funktionsgleiche Komponenten, soweit nichts Gegenteiliges angegeben ist.

### AUSFÜHRLICHE BESCHREIBUNG VON AUSFÜHRUNGSBEISPIELEN DER ERFINDUNG

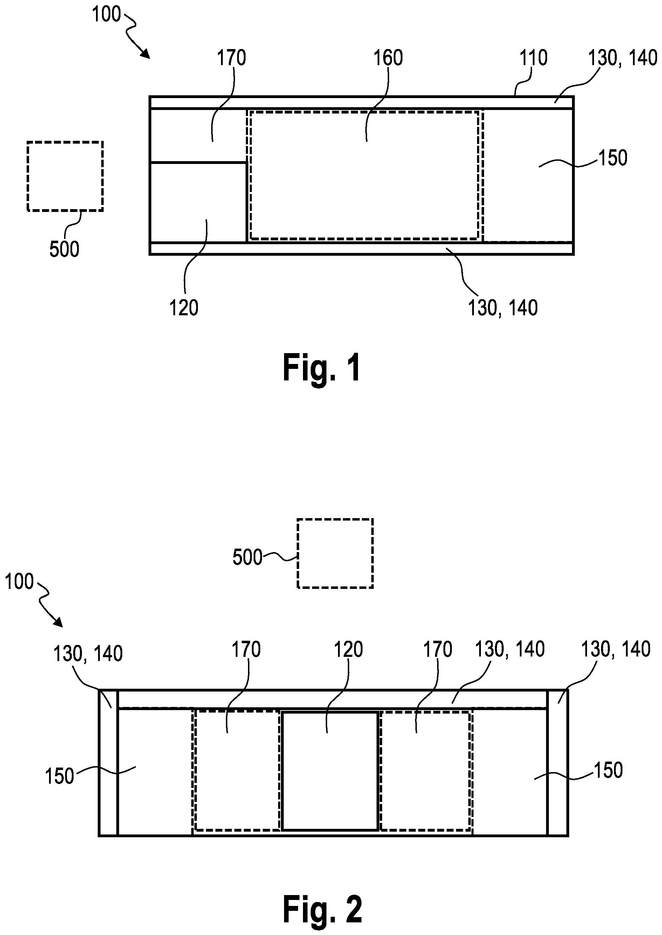

Fig. 1 zeigt eine exemplarische Vorrichtung 100, die dazu eingerichtet ist, einem Zielobjekt 500 im Weltraum entgegenzuwirken.

Die Vorrichtung 100 weist wenigstens einen Raumflugkörper 110 auf. Der Raumflugkörper 110 ist dazu eingerichtet, sich basierend auf Zieldaten dem Zielobjekt 500 anzunähern. Zudem weist die Vorrichtung einen Effektor 120 auf, der von dem Raumflugkörper 110 tragbar oder getragen ist. Der Effektor 120 ist dazu eingerichtet, von dem Raumflugkörper 110 aus das Zielobjekt 500 einzufangen oder an das Zielobjekt 500 anzukoppeln.

In zumindest einigen Ausführungsbeispielen kann der Raumflugkörper 110 beispielsweise ein Raumfahrzeug, eine Raumsonde, ein künstlicher Satellit, eine Rakete, oder dergleichen sein. Der Raumflugkörper 110 kann eine weltraumtaugliche Struktur 130 aufweisen, die u.a. auch zum Tragen des Effektors 120 geeignet ist. Zudem kann der Raumflugkörper 110, z.B. die Struktur 130, ein Lagekontrollsystem 140, z.B. ein Attitude Determination and Control System (ACS), aufweisen, das zur Steuerung der Orientierung, Lage oder dergleichen des Raumflugkörpers 110 in Bezug auf einen Bezugsrahmen oder eine andere Entität wie beispielsweise die Himmelskugel, bestimmte Felder, nahe gelegene Objekte usw. eingerichtet ist. Es kann z.B. wenigstens einen Sensor, wenigstens einen Aktuator zum Aufbringen eines Moments zum Erreichen einer bestimmten Höhe, eine elektronische Steuerung oder dergleichen aufweisen. Des Weiteren kann der Raumflugkörper 110 in zumindest einigen Ausführungsbeispielen einen bordeigenen Antrieb 150, z.B. wenigstens ein Triebwerk oder dergleichen, und wenigstens eines der folgenden Mittel 160 aufweisen: eine bordeigene Energieversorgung, z.B. Photovoltaik, eine Batterie oder dergleichen, ein bordeigenes Steuersystem, z.B. mit wenigstens einem Zusatztriebwerk oder dergleichen, das dazu eingerichtet ist, den Raumflugkörper 110 zu steuern und/oder zu manövrieren, eine bordeigene Recheneinrichtung, wie etwa einen Computer, Prozessor, oder dergleichen, ein Kommunikationssystem, ein System zur Führung, Navigation und Steuerung, z.B. ein Guidance Navigation and Control (GNC) System. Des Weiteren kann der Raumflugkörper 110 in zumindest einigen Ausführungsbeispielen wenigstens einen Suchkopf 170 (engl. Seeker) aufweisen.

Des Weiteren kann in zumindest einigen Ausführungsbeispielen der wenigstens eine Antrieb 150 dazu eingerichtet sein, den Raumflugkörper 110 bei eingefangenem Zielobjekt 500 oder bei Ankopplung an das Zielobjekt 500 zu bewegen. Beispielsweise kann der wenigstens eine Antrieb 150 als wenigstens ein Triebwerk oder ein anderes für den Weltraum geeignetes Antriebsmittel ausgeführt sein. Das Bewegen des Raumflugkörpers 110 mitsamt Zielobjekt 500 kann beispielsweise dazu dienen, das Zielobjekt 500 mitzubewegen bzw. mitzunehmen, um dessen Flugbahn oder Orbit zu manipulieren.

In zumindest einigen Ausführungsbeispielen kann der Effektor 120 auch bei eingefangenem Zielobjekt 500 oder bei Ankopplung an das Zielobjekt 500 mit dem Raumflugkörper 110 gekoppelt sein oder gekoppelt bleiben. Die Kopplung kann direkt sein, indem der Effektor 120 an dem Raumflugkörper 110 angeordnet und damit gekoppelt ist, z.B. daran angebracht, daran befestigt, oder dergleichen ist. Die Kopplung kann jedoch auch indirekt sein, beispielsweise durch wenigstens ein Zwischenelement, dass zwischen dem Effektor 120 und dem Raumflugkörper 110 angeordnet ist. Dadurch kann das Zielobjekt 500 mit dem Raumflugkörper 110 mitbewegt und/oder mitgenommen werden, um beispielsweise dessen Flugbahn oder Orbit zu manipulieren, zu verändern, usw. In zumindest einigen Ausführungsbeispielen kann der Effektor 120, oder auch nur ein Teil davon, von dem Raumflugkörper aus hin zu dem Zielobjekt 500 ausbringbar sein. Das Ausbringen kann beispielsweise durch Auswerfen, Abschießen oder dergleichen erfolgen. Beispielsweise kann sich der Raumflugkörper 110 auf einem geeigneten Orbit dem Zielobjekt 500 annähern, seine Geschwindigkeit ggf. an das Zielobjekt 500 anpassen und dann den Effekt 120 in Richtung des Zielobjekts ausbringen.

Es sei angemerkt, dass die Anordnung und/oder die Ausgestaltung der Komponenten der Vorrichtung 100 bzw. des Raumflugkörpers 110, d.h. des Effektors 120, der Struktur 130, des Lagekontrollsystems 140, z.B. Attitude Determination and Control System (ACS), des wenigstens einen Triebwerks 150 und des Suchkopfes 170, gemäß Fig. 1 lediglich exemplarisch ist und auch andere Anordnungen und/oder Ausgestaltungen möglich sind. Beispielsweise kann die jeweilige Anordnung und/oder Ausgestaltung auftrags- oder missionsabhängig gewählt werden. Zudem kann die jeweilige Anordnung und/oder Ausgestaltung in Abhängigkeit des Effektors 120, z.B. seines Typs, seiner Ausgestaltung, usw., gewählt werden.

Fig. 2 zeigt die Vorrichtung 100 in einem weiteren Ausführungsbeispiel. Dieses weicht von Fig. 1 im Wesentlichen durch die Anordnung und/oder die Ausgestaltung der Komponenten der Vorrichtung 100 bzw. des Raumflugkörpers 110, d.h. des Effektors 120, der Struktur 130, des Lagekontrollsystems 140, z.B. Attitude Determination and Control System (ACS), des wenigstens einen Triebwerks 150 und des Suchkopfes 170, ab.

Dementsprechend können beispielsweise zwei Antriebe 150, z.B. Triebwerke, vorgesehen sein. Auch können beispielsweise wenigstens zwei Suchköpfe 170 vorgesehen sein. Dies ist lediglich exemplarisch und es können auch andere Anordnungen und/oder Ausgestaltungen möglich sein. Wie oben erwähnt, kann die jeweilige Anordnung und/oder Ausgestaltung auftrags- oder missionsabhängig und/oder in Abhängigkeit des verwendeten Effektors 120, usw. gewählt werden.

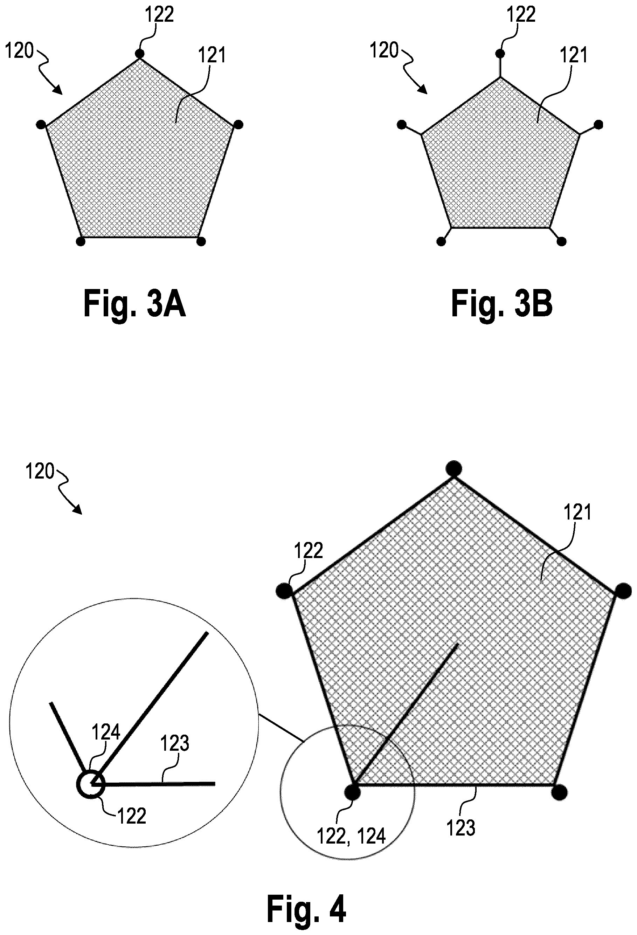

Fig. 3A und Fig. 3B zeigen jeweils ein Ausführungsbeispiel des Effektors 120.

Gemäß Fig. 3A und Fig. 3B kann der Effektor 120 ein Flächengebilde 121 aufweisen. Das Flächengebilde 121 kann dazu eingerichtet sein, das Zielobjekt 500 zumindest teilweise zu umschließen. Beispielsweise kann das Flächengebilde als Netz, d.h. mit Maschen oder Öffnungen, als Tuch, Folie, oder dergleichen ausgeführt sein. Das Flächengebilde kann auch aus einem Metallwerkstoff gefertigt sein. Das Flächengebilde 121 kann dazu dienen, das Zielobjekt 500 festzuhalten und das auf diese Weise eingefangene Zielobjekt 500 auf eine Umlaufbahn zu ziehen und/oder zu bringen, die zumindest die Bedrohung durch das Zielobjekt 500 verringert. Beispielsweise kann dies zum Absturz des Zielobjekts 500 führen, ggf. mitsamt Effektor 120. In zumindest einigen Ausführungsbeispielen kann der Effektor 120 auch vor dem Absturz von dem Raumflugkörper 110 gezielt getrennt werden, z.B. durch Kappen einer Verbindung und/oder eines Zwischenelements.

Gemäß Fig. 3A und Fig. 3B weist der Effektor 120 exemplarisch ein Netz auf, das als Wurfnetz ausgeführt ist und ein Beispiel für das Flächengebilde 121 ist. Das Netz kann dazu dienen, das Zielobjekt 500 einzufangen, indem das Netz ausgebracht wird und das Zielobjekt 500 zumindest teilweise umschließt. Die Maschengröße des Netzes kann so gewählt sein, dass Bruchstücke des Zielobjekts 500 im Netz zurückgehalten werden, damit diese keine Gefahr für die Raumfahrt darstellen. Beispielsweise kann das Wurfnetz als Vieleck, Stern oder dergleichen ausgeführt sein.

Fig. 4 zeigt den exemplarischen Effektor 120 aus Fig. 3A und Fig. 3B nochmals in einem detaillierteren Ausführungsbeispiel.

An den Ecken des textilen Flächengebildes 121, z.B. Wurfnetzes, können Gewichte 122 angebracht sein. Es ist auch denkbar, dass die Gewichte 122 über z.B. ein Seil, eine Kordel oder dergleichen an den Ecken befestigt sind. Das Wurfnetz kann beispielsweise eine umlaufende Kordel 123 aufweisen, auf der das Netz aufgefädelt ist, ähnlich zu einem Vorhang auf einer Stange. Die Gewichte 123 sind am Netz befestigt, nicht an der Kordel. An einer Ecke kann der Beginn der Kordel 126 an einer Öse 128 befestigt sein, wobei durch diese Öse 128 das andere Ende der Kordel 126 gezogen und dann zum Schwerpunkt des Netzes geführt werden kann. Dort kann es mit einer weiteren Öse befestigt und erneut umgelenkt werden. Diese zweite Öse stellt eine Sollbruchstelle dar und reißt bei zu starker Krafteinwirkung ab, ohne das Netz zu beschädigen.

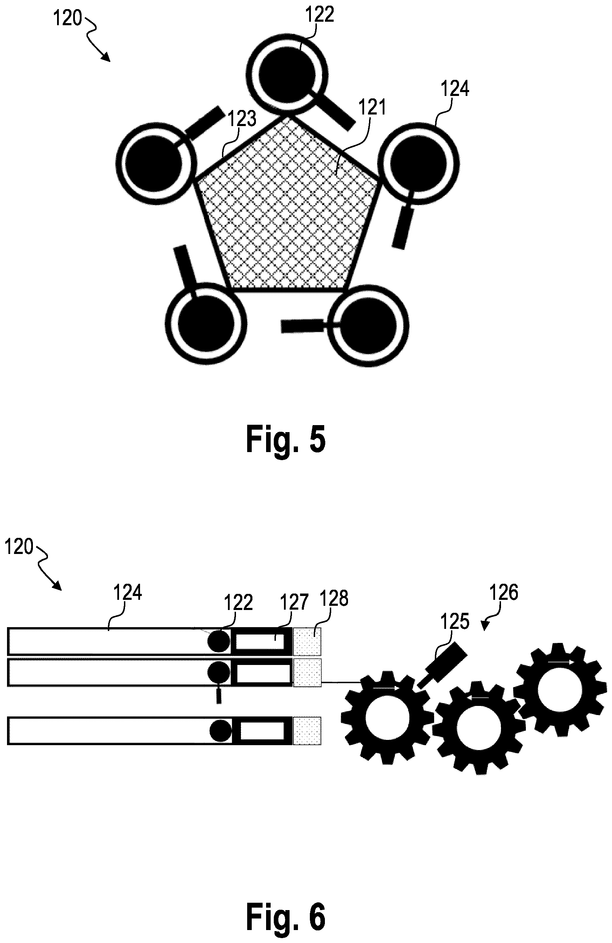

Fig. 5 zeigt den exemplarischen Effektor 120 aus Fig. 3A und Fig. 3B sowie Fig. 4 nochmals in einem detaillierteren Ausführungsbeispiel.

Demnach kann das Wurfnetz mittels eines Auswurfmechanismus hin zu dem Ziel auswerfbar und dort mittels Seilzugs zusammenziehbar sein. Die Ecken des Netzes und/oder die Gewichte 122 an diesen Ecken können in jeweiligen Startrohren 124 angeordnet werden. Die Gewichte 122 können beispielsweise kugelförmig ausgeführt sein.

Fig. 6 zeigt den exemplarischen Effektor 120 aus Fig. 3A und Fig. 3B, Fig. 4 und Fig. 5 nochmals in einem detaillierteren Ausführungsbeispiel.

Demnach kann das jeweilige, formstabile Startrohr 124 auf einer dem Netz zugewandten Seite geschlitzt sein. Durch diesen Schlitz können die kugelförmigen Gewichte 122 mit dem Netz verbunden sein. Beispielsweise kann ein Riegel 125 mit Motor die Gewichte 122 in ihrer Startposition arretieren. Die das Netz umschließende Kordel 123 kann von den Startrohren 124 aus nach hinten, d.h. zum Raumflugkörper 110 hin, herausgeführt und auf eine Winde 126 geführt sein. Die Winde 126 kann beispielsweise von zwei gegenläufig drehenden Elektromotoren angetrieben werden. Vor dem Start des Wurfnetzes kann die Winde 126 mit dem, z.B. elektrisch angetriebenen, Riegel 125 arretiert sein. Bei Start des Wurfnetzes kann der Riegel 125 von Winde 126 und Gewichten 122 gelöst werden, wobei sich die Elektromotoren hierbei im Leerlauf befinden können. Durch Zünden von Gasgeneratoren 127 in den Vorvolumen können sich diese mit Gas unter Druck füllen, wobei dieses über eine im Durchmesser auf die Anwendung optimierte Öffnung in einen Airbag 128 eingeleitet werden kann. Der Airbag 128 kann sich unter dem Gasdruck aufblasen, kann dabei seitlich durch das Startrohr 124 begrenzt werden und so einen an der Vorderseite des Airbags 128 angebrachten Treibspiegel nach vorne bewegen. Dies beschleunigt auch das Gewicht 122, das schließlich ausgestoßen wird, wobei der Airbag 128 selbst ist an der Seite zum Vorvolumen fixiert ist und im Startrohr 124 verbleiben kann.

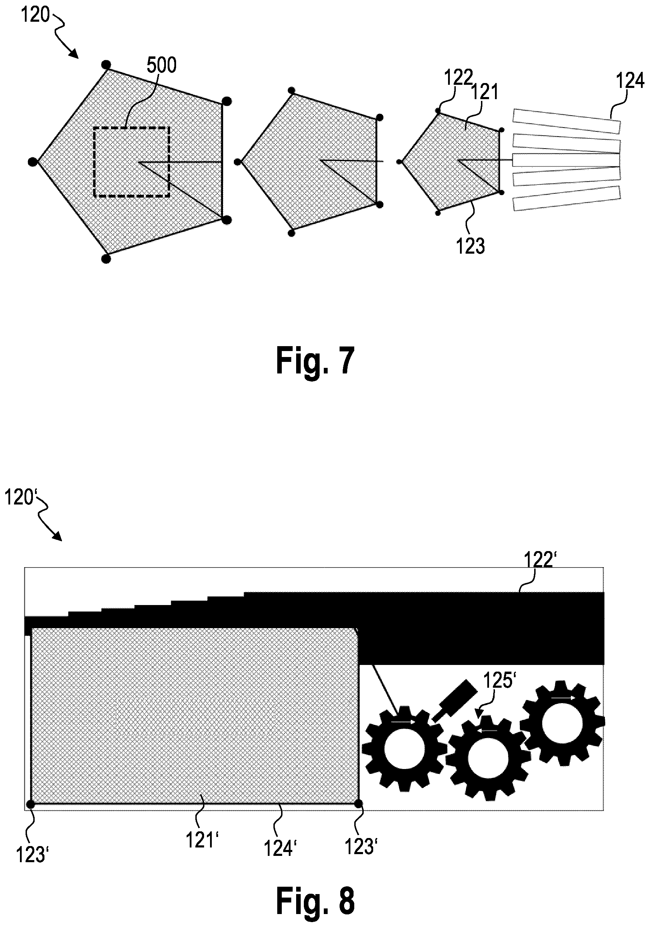

Fig. 7 zeigt eine exemplarische Verwendung des exemplarischen Effektors 120 aus Fig. 3A und Fig. 3B, Fig. 4, Fig. 5 und Fig. 6.

Demgemäß können, um das Wurfnetz auseinanderzuziehen, können die Querschnittsmittelpunkte der jeweiligen Startrohre 124 an der Austrittseite weiter vom gemeinsamen Schwerpunkt entfernt sein, als dies in der Startposition der Fall ist. Dadurch kann eine vom Zentrum abgewandte Beschleunigungskomponente erzeugt werden, die das Netz aufspannt und der durch das Rückhohlseil wirkenden Kraft entgegenwirkt. Sobald das Wurfnetz nun auf das Zielobjekt 500 trifft, bremst das Zielobjekt 500 das Wurfnetz selbst ab, während sich die Gewichte 122 um das Zielobjekt 500 herumbewegen, bis sie vom Wurfnetz zurückgehalten werden und dann bewirken, dass das Zielobjekt 500 durch das Wurfnetz umschlungen wird.

Nachdem das Zielobjekt 500 von dem Wurfnetz umschlossen ist, kann die Winde 126 gestartet werden. Dadurch kann sich der Raumflugkörper 110 an einem Rückholseil entlang zum Zielobjekt 500 ziehen. Die in der Mitte des Netzes angebrachte Öse kann so ausgeführt sein, dass sie dabei an ihrer Sollbruchstelle abreißt, so dass der Raumflugkörper 110 zu der Ecke des Wurfnetzes gezogen wird, an der die Kordel beginnt. Sobald sich der Raumflugkörper 110 nicht mehr weiter an das Zielobjekt 500 annähern kann, zieht die Winde 126 das Wurfnetz zu.

Fig. 8 zeigt ein weiteres Ausführungsbeispiel des Effektors 120, der in diesem Ausführungsbeispiel zur besseren Übersichtlichkeit mit 120' bezeichnet ist.

Gemäß Fig. 8 kann der Effektor 120' ein Schleppnetz 121' aufweisen. Das Schleppnetz 121' kann mittels eines Auslegers 122' von dem Raumflugkörper 110 beabstandbar und/oder aufspannbar, z.B. entfaltbar, sein. Das Schleppnetz 121' kann beispielsweise mittels des Auslegers 23', z.B. mittels einer Teleskopstange oder dergleichen, mit dem Raumflugkörper 110 gekoppelt sein. Dies kann im oder nahe des Schwerpunkts des Raumflugkörpers 110 erfolgen, z.B. auch zwischen zwei Triebwerken des Raumflugkörpers 110 (vgl. Triebwerke 150 in Fig. 2). Das Schleppnetz 121', kann als Vieleck, z.B. Viereck, Rechteck, usw., ausgeführt sein. Vor Ausbringung des Schleppnetzes 121' kann dieses, z.B. zusammengefaltet, innerhalb des Effektors verstaut sein. Das zusammengefaltete Schleppnetz kann, z.B. an seiner Unterseite, Gewichte 123' an den Enden aufweisen. Das Schleppnetz 121' kann eine umlaufende Kordel 124' aufweisen, an der das Schleppnetz 121' nicht fixiert ist. Auf dem Ausleger 122', z.B. der Teleskopstange oder dergleichen, kann das Schleppnetz 121' lose aufgereiht sein, wobei es an den Enden mit einer automatisch lösbaren Verbindung fixiert sein kann. Die Kordel 124' kann über ein Rückholseil zu einer Winde 125' geführt sein.

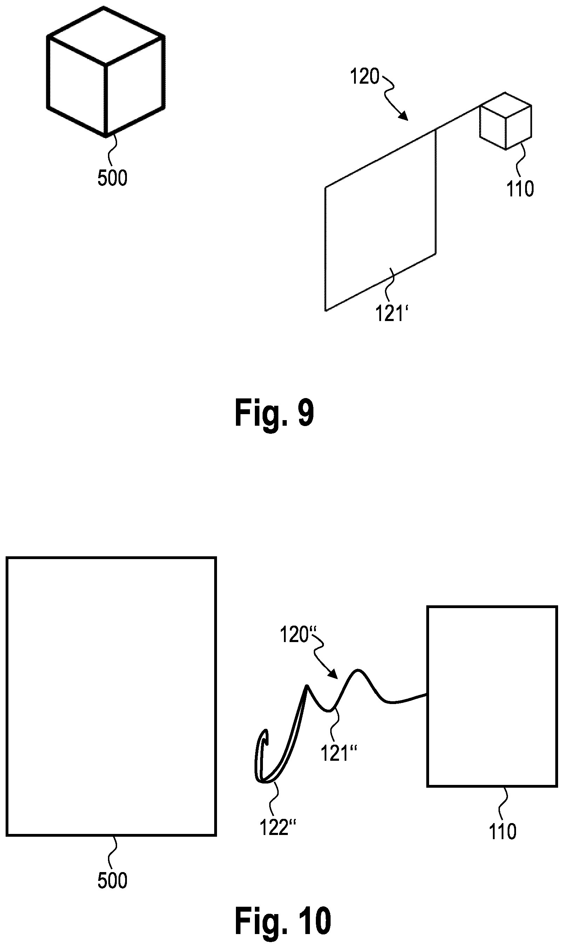

Fig. 9 zeigt eine mögliche Verwendung des Effektors 120' aus Fig. 8. Demnach kann sich der Raumflugkörper 110 mitsamt dem das Schleppnetz 121' aufweisenden Effektor 120' auf dem Zielorbit dem Zielobjekt 500 mit leicht erhöhter Bahngeschwindigkeit annähern. Während der Annäherung kann das Schleppnetz 121' ausgebracht werden. Hierzu kann zunächst das der Ausleger 122', z.B. die Teleskopstange oder dergleichen, ausgefahren werden. Dabei kann die Winde 125' entriegelt und die Motoren im Leerlauf sein. In diesem Zustand kann sich das Schleppnetz 121' aufgrund der Haltepunkte, die z.B. vorne und hinten angeordnet sein können, zumindest teilweise, z.B. in seitliche oder horizontale Richtung, entfalten. Zum Entfalten in die andere Richtung, z.B. Hochrichtung oder vertikale Richtung, kann ein weiterer Mechanismus vorgesehen sein. Beispielsweise kann der Mechanismus zum weiteren Entfalten in oder an den Gewichten 123' angeordnet sein. Es kann beispielsweise ein Triebwerk, z.B. Kaltgastriebwerk, ähnlich einer Steuerdüse eines Lagekontrollsystems vorgesehen sein, um über die Gewichte das Schleppnetz weiter zu entfalten. Vor dem Einfangen des Zielobjekts 500 können die Haltepunkte des Schleppnetzes 121' an dem ausgefahrenen Ausleger 122', z.B. Teleskopstange oder dergleichen, gelöst und dieses wieder eingefahren werden.

Fig. 10 zeigt ein weiteres Ausführungsbeispiel des Effektors 120, der in diesem Ausführungsbeispiel zur besseren Übersichtlichkeit mit 120" bezeichnet ist.

Demgemäß kann der Effektor 120" ein biegeschlaffes, langgestrecktes Element 121" aufweisen, das um das Zielobjekt 500 herum wickelbar ist. Beispielsweise kann das Element 121" als Seil, z.B. aus Kevlar oder dergleichen, Kabel, Kette oder dergleichen ausgeführt sein, wobei das Element 121" an seinem dem Raumflugkörper 110 und/oder Effektor 120" abgewandten Ende zusätzlich wenigstens einen Haken 122" aufweisen bzw. mit wenigstens einem Haken 122" bewehrt sein kann. Es können auch mehrere Haken 122" entlang des Elements angeordnet, z.B. auch in bestimmten oder gleichmäßigen Abständen.

Beispielsweise kann sich der Raumflugkörper 110 auf dem Zielorbit dem Zielobjekt 500 annähern und sich auf demselben Orbit bewegen, entsprechend mit zumindest annähernd gleicher Geschwindigkeit. Das mit Haken 122" bewehrte Element 121", z.B. Seil, kann in Richtung des Zielobjekts 500 aus- oder abgelassen werden. Durch z.B. Rotation des Zielobjekts 500 kann sich das Element 121", z.B. Seil, mit Haken 122" an der Oberfläche des Zielobjekts 500 verfangen und sich um diese wickeln. Über eine im Effektor 120" verbaute Seilwinde, kann sich der Raumflugkörper 110 selbst zum Zielobjekt 500 heranziehen und so die Distanz zu diesem verlängern oder verkürzen. Dadurch kann ein Drehmoment des Zielobjekts 500 bewirkt werden. Diese Veränderung des Drehmoments kann beispielsweise die Funktionsfähigkeit eines Lagekontrollsystems oder einer anderen Funktionskomponente des Zielobjekts 500 beeinträchtigen. Dies kann beispielsweise bewirken, dass sich das Zielobjekt 500 in einen Safe Mode begibt und/oder seine Mission beendet. Zudem kann das Element 121", z.B. Seil, selbst die Beweglichkeit von z.B. Solarpanelen des Zielobjekts 500 einschränken, wodurch wiederum die Funktionsfähigkeit beeinträchtigt werden kann.

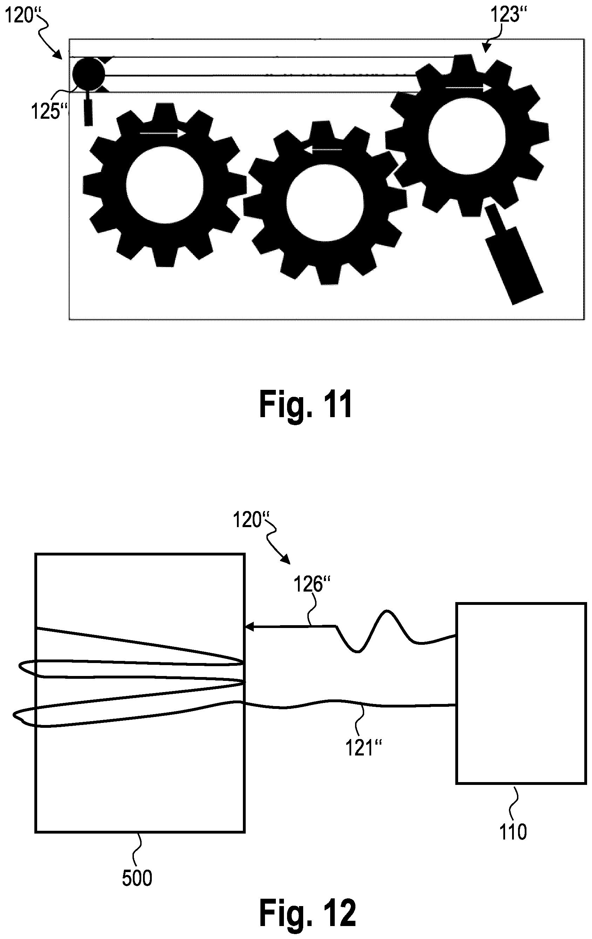

Fig. 11 zeigt weitere Details gemäß einem Ausführungsbeispiel des exemplarischen Effektors 120" aus Fig. 10.

Demgemäß kann das biegeschlaffe, langgestreckte Element 121" mittels eines Seilzugs 123", z.B. einer motorgetriebenen Winde, ausgebracht und/oder rückgeholt werden. Um beispielsweise ein ausgeglichenes Drehmoment zu ermöglichen, können zwei über z.B. Zahnräder gekoppelte Elektromotoren die Winde antreiben. Im Lagerzustand oder wenn ein Verändern der Seillänge nicht erwünscht ist, kann die Winde mit einem, z.B. elektrisch angetriebenen, Riegel 124" arretiert werden. Um zu verhindern, dass die Haken 122" sich untereinander oder mit der Winde 123" verhaken, können sich diese nur im unteren Bereich des Elements 121" befinden und in einem Rohrstück in Verlängerung der Winde gelagert werden. Am Ende des Elements 121" kann ein Gewicht 125" angeordnet sein. Das Rohrstück kann verjüngt sein, damit das Gewicht 125" nicht bis zur Winde 123" gezogen werden kann. Zum Abwickeln des Elements 121" kann der Raumflugkörper 110 so in Rotation gebracht werden, dass die Zentrifugalkraft das Gewicht 125", und damit das Element 121" nach draußen zieht. Die Rotation kann in unmittelbarer Nähe zum Zielobjekt 500 durchgeführt werden. Die Motoren können im Leerlauf sein. Das Element 121" kann in Kontakt mit dem Zielobjekt 500 kommen, wobei sich das Zielobjekt 500 am Element 121" verhaken kann. Sobald sich das Zielobjekt 500 weit genug in dem Element 121" verwickelt hat, kann die Position der Winde 123" mittels des Riegels 124" arretiert werden.

Fig. 12 zeigt ein weiteres Ausführungsbeispiel des exemplarischen Effektors 120" aus Fig. 10 und Fig. 11.

Demgemäß kann der Effektor 120" zusätzlich eine Harpune 126" oder dergleichen aufweisen, die auf das Zielobjekt 500 geschossen werden kann, um darüber einen weiteren Haltepunkt mit dem Zielobjekt 500 auszubilden. Durch Verkürzen des biegeschlaffen Elements 121" und eines Seils der Harpune 126" kann eine kraftschlüssige Verbindung zwischen dem Raumflugkörper 110 und dem Zielobjekt 500 ausgebildet werden. Diese Verbindung kann beispielsweise dazu genutzt werden, den Orbit des Zielobjekts 500 zu verändern, um z.B. einen Absturz des Zielobjekts 500 zu bewirken.

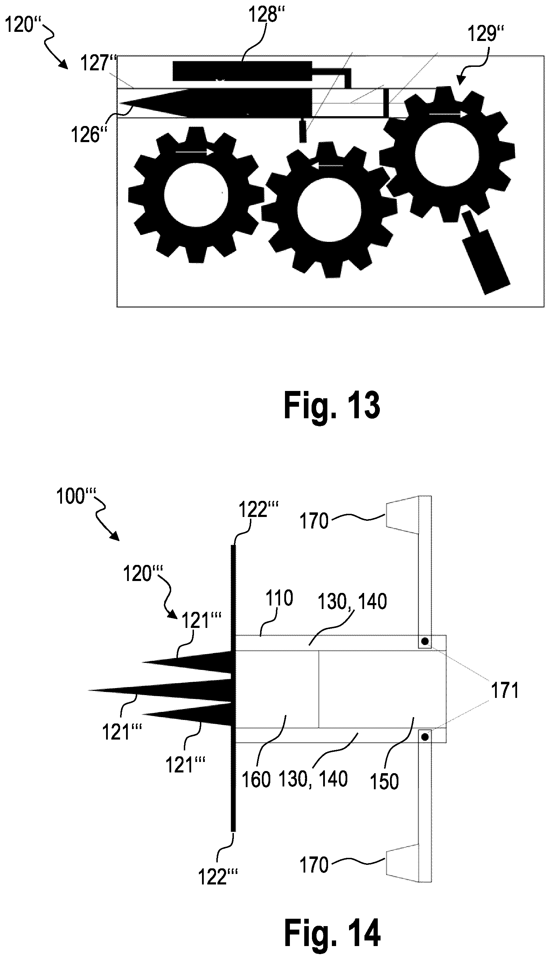

Fig. 13 zeigt weitere Details gemäß einem Ausführungsbeispiel des exemplarischen Effektors 120" aus Fig. 10, Fig. 11 und Fig. 12.

Demgemäß kann die Harpune 126" mittels eines Auswurfmechanismus, z.B. eines Startrohrs 127", Gasgenerators 128" und einer Winde 129", auf das Zielobjekt 500 geschossen werden. Im Transport- und/oder Lagerzustand kann die Harpune 126" im Startrohr 127" arretiert sein, beispielsweise durch einen Riegel, der von einem elektrischen Stellmotor angetrieben sein kann. Vor dem Abschuss der Harpune 126" kann der Riegel gelöst und anschließend das Volumen zwischen Harpune 126" und z.B. einer Blende mit der Führung für ein Seil der Harpune 126" mit Gas aus dem Gasgenerator 128" gefüllt werden. Die Winde 129" kann zu diesem Zeitpunkt bereits entriegelt sein, wobei sich Motoren der Winde 129" im Leerlauf befinden können, so dass das Seil nahezu Widerstandsfrei abgewickelt werden kann. Durch den Gasdruck kann die Harpune 126" aus dem Startrohr 127" hin auf das Zielobjekt 500 beschleunigt werden. Dabei kann der Raumflugkörper 110 ggf. in geringerem Maße in die Gegenrichtung beschleunigt werden. Die Winde 129" kann auch als Rückholmechanismus zu dem Raumflugkörper 110 hin dienen. Um das Wiederherausziehen der Harpune 126" aus dem Zielobjekt 500 zu erschweren, kann die Harpune 126", z.B. an ihrem Schaft und/oder an ihrer Spitze, Widerhaken aufweisen.

Fig. 14 zeigt in einer schematischen Draufsicht ein weiteres Ausführungsbeispiel des Effektors 120, der in diesem Ausführungsbeispiel zur besseren Übersichtlichkeit mit 120‴ bezeichnet ist.

Demgemäß kann der Effektor 120‴ wenigstens ein speerförmiges Element 121‴ aufweisen. Das speerförmige Element 121‴ kann dazu eingerichtet sein, eine kraftschlüssige und/oder formschlüssige Kopplung mit dem Zielobjekt 500 auszubilden. Um das Wiederherausziehen des speerförmigen Elements 121‴ aus dem Zielobjekt 500 zu erschweren, kann das Element, z.B. an seinem Schaft und/oder seiner Spitze, Widerhaken aufweisen. Der Effektor 120‴ kann ggf. zusätzlich wenigstens einen Stopper 122'", z.B. eine Platte oder dergleichen, aufweisen, der dazu eingerichtet ist, einen Anschlag und/oder Stopp auszubilden, wenn das speerförmige Element 121‴ in das Zielobjekt 500 eindringt. Die Spitze des speerförmigen Elements 121‴ kann aus einem gehärteten Material ausgebildet sein, das dazu eingerichtet ist, eine Hülle des Zielobjekts 500 punktuell zu durchdringen. Die Geschwindigkeit des Raumflugkörpers 110 kann derart gewählt werden, dass das wenigstens eine speerförmige Element 121‴ eindringen kann, der wenigstens eine Stopper 122‴ allerdings nicht.

Die Vorrichtung 100 bzw. der Raumflugkörper 110 kann beispielsweise zwei Suchköpfe 170 aufweisen. Diese können über einen jeweiligen Drehpunkt 171 schwenkbar und/oder klappbar gelagert sein. Fig. 14 zeigt die zwei Suchköpfe 170 in einem ausgeklappten, operativen Zustand. Die Suchköpfe können beispielsweise als Stereo IR oder als optische Kamera ausgeführt sein, die auf zwei gegenüberliegenden Seiten ausgeklappt werden können.

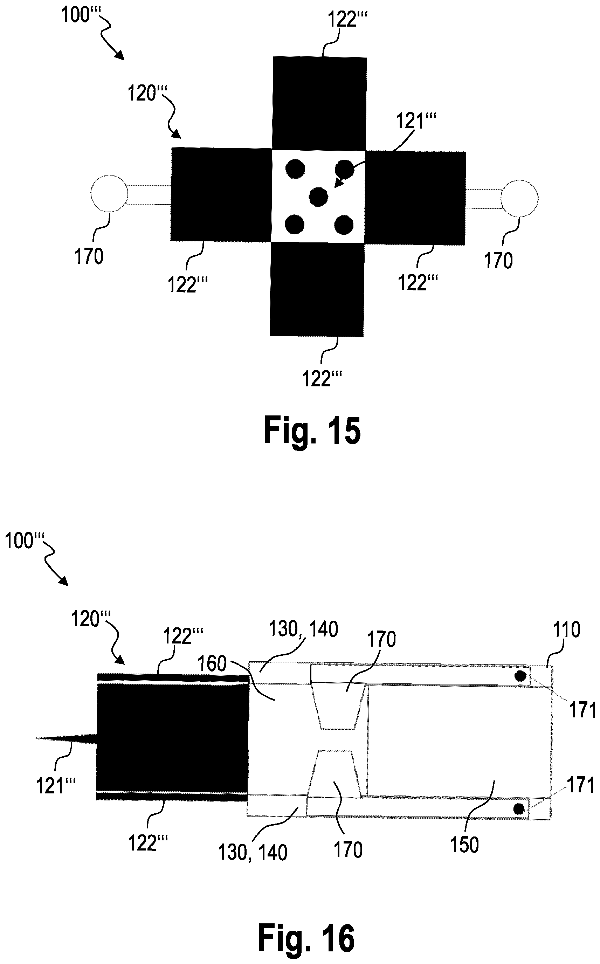

Fig. 15 zeigt den Effektor 120‴ aus Fig. 14 in einer schematischen Vorderansicht. Auch in dieser Darstellung befinden sich die zwei Suchköpfe 170 in einem ausgeklappten, operativen Zustand. Der Effektor 120‴ weist das wenigstens eine speerförmige Element 121‴ und den wenigstens einen Stopper 122‴ auf. Der wenigstens eine Stopper 122‴ befindet sich in einem operativen, z.B. ausgeklappten, Zustand.

Fig. 16 zeigt den Effektor 120‴ aus Fig. 14 und Fig. 15 in einer schematischen Seitenansicht. In dieser Darstellung in einem verstauten Zustand. Dabei sind die beiden Suchköpfe 170 um den jeweiligen Drehpunkt 171 nach innen verschwenkt und/oder eingeklappt. Der wenigstens eine Stopper 122‴ befindet sich in einem verstauten, z.B. eingeklappten, Zustand.

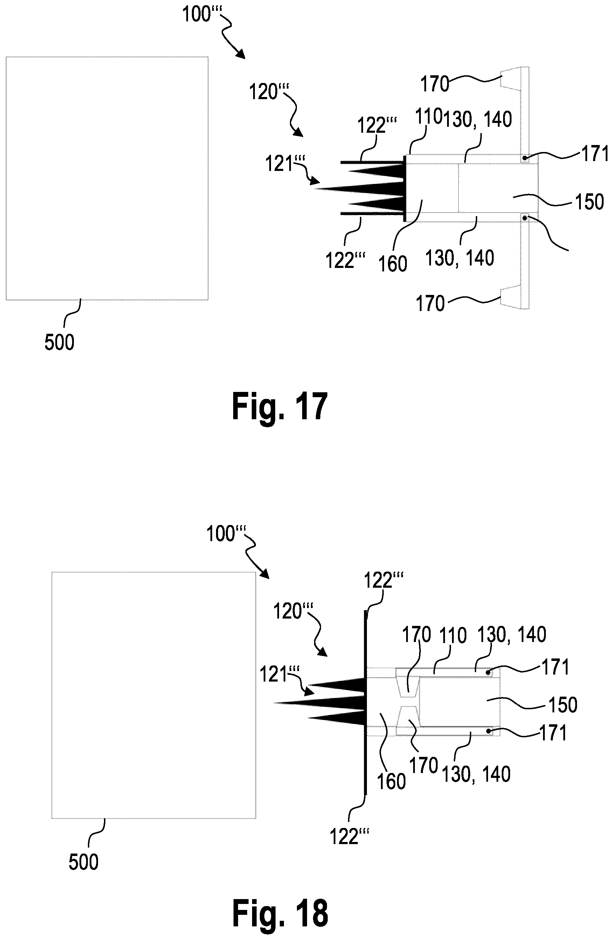

Fig. 17 und Fig. 18 zeigen eine mögliche Verwendung des Effektors 120‴ aus Fig. 14, Fig. 15 und Fig. 16 in einer schematischen Seitenansicht.

Fig. 17 zeigt die Vorrichtung 100‴ bzw. den Raumflugkörper 110 während der Annäherung an das Zielobjekt 500. Dabei kann die Annäherung basierend auf Daten der zwei Suchköpfe 170 erfolgen. Der wenigstens eine Stopper 122‴ kann sich oder kann sich noch in einem verstauten Zustand befinden. Fig. 18 zeigt die Vorrichtung 100‴ bzw. den Raumflugkörper 110 vor dem Aufprall auf das Zielobjekt 500. Dabei kann sich der wenigstens eine Stopper 122‴ in einem operativen, z.B. ausgeklappten, Zustand befinden.

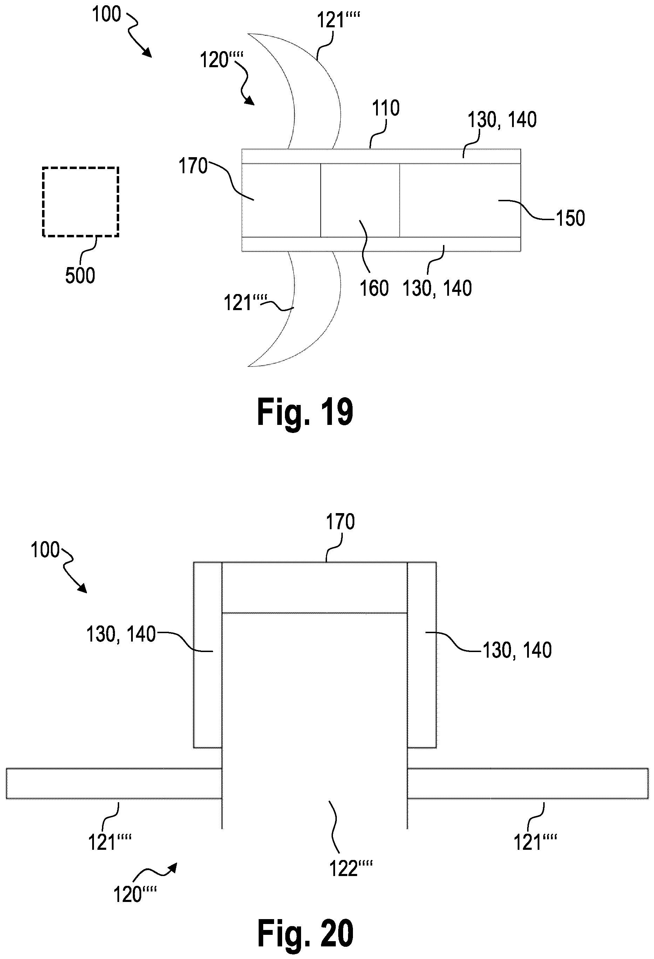

Fig. 19 zeigt in einer schematischen Draufsicht ein weiteres Ausführungsbeispiel des Effektors 120, der in diesem Ausführungsbeispiel zur besseren Übersichtlichkeit mit 120ʺʺ bezeichnet ist.

Demgemäß kann der Effektor 120ʺʺ einen Klammermechanismus aufweisen. Der Klammermechanismus kann dazu eingerichtet sein, das Zielobjekt 500 zumindest teilweise zu umschließen, um dieses zu halten, und/oder das Zielobjekt 500 zu schneiden. Beispielsweise kann der Klammermechanismus als Halteklammer oder als Schneidklammer ausgeführt sein. Dabei kann die Halteklammer zumindest im Wesentlichen stumpf sein. Oder die Halteklammer kann stumpfer sein als die Schneidklammer, die wenigstens eine Klinge, Schneide oder dergleichen aufweisen kann. Die Schneidklammer kann dazu dienen, zumindest teilweise in die Struktur des Zielobjekts 500 einzudringen, um zumindest einen Teil davon zu umschließen und so eine kraftschlüssige Verbindung zwischen dem Raumflugkörper und/oder Effektor und dem Zielobjekt zu bewirken. Der Klammermechanismus kann beispielsweise motorgetrieben, z.B. elektrisch angetrieben, oder pyrotechnisch angetrieben ausgeführt sein. Mittels des Antriebs 150 des Raumflugkörpers 110 kann das Zielobjekt 500 zur zumindest teilweisen Unschädlichmachung bewegt werden. Die Schneidklammer kann auch bei groß bauenden Zielobjekten 500 eingesetzt werden, da ein Umschließen der Struktur nicht erforderlich ist. Die Halteklammer kann sich an vielerlei Zielobjekten 500 unterschiedlicher Größe und Form festhalten.

Fig. 20 zeigt die Vorrichtung 100 mit dem Effektor 120ʺʺ in einer schematischen Vorderansicht. Der wenigstens eine Suchkopf 170 ist versetzt zu dem Klammermechanismus angeordnet, der hier mit 122ʺʺ bezeichnet ist, damit das Sichtfeld des Sucherkopfes 170 möglichst frei und/oder groß ist.

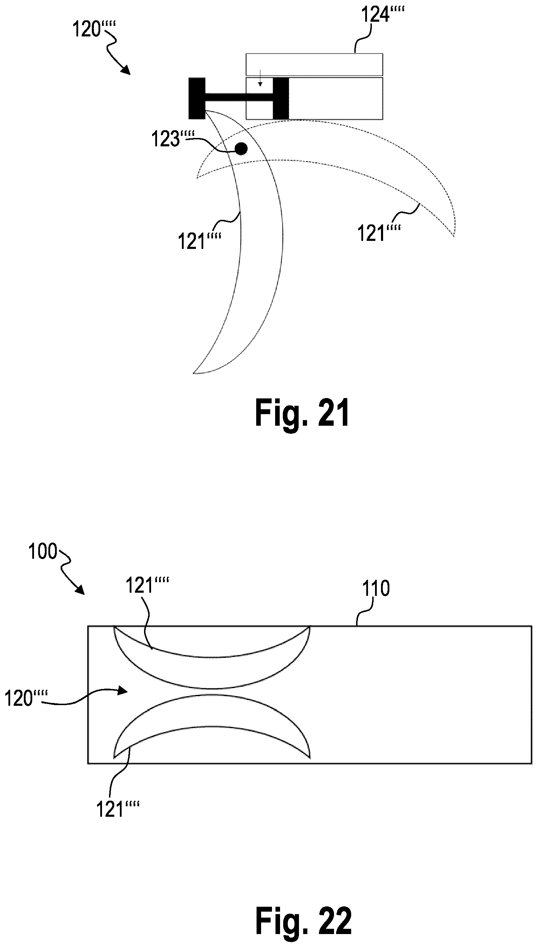

Fig. 21 zeigt weitere Details gemäß einem Ausführungsbeispiel des exemplarischen Effektors 120ʺʺ aus Fig. 19 und Fig. 20.

Demgemäß kann der Klammermechanismus zwei Klammerelemente 121ʺʺ bzw. Schenkel aufweisen, die z.B. auch einen gemeinsamen Drehpunkt 123ʺʺ aufweisen können. Ein am Drehpunkt 123ʺʺ angreifender Elektromotor kann die Klammerelemente 121ʺʺ bewegen. Zum Schließen des Klammermechanismus kann beispielsweise ein Gasgenerator 124ʺʺ aktiviert werden, der ein auf wenigstens eines der Klammerelemente 121ʺʺ wirkendes Volumen vergrößert und das Klammerelemente 121ʺʺ dadurch betätigt bzw. beschleunigt. Durch ein Ventil am Übergang vom Gasgenerator 124ʺʺ zu dem Volumen kann der Druck in dem Volumen, und damit die Beschleunigung des Klammerelements 121"", kontrolliert werden. Um dabei ein Zurückrutschen des Klammerelements 121"", kann der Klammermechanismus beim Vorrücken, z.B. schrittweise, arretiert werden.

Fig. 22 zeigt den exemplarischen Effektor 120ʺʺ aus Fig. 19, Fig. 20 und Fig. 21 in einer verstauten Position. Dabei sind die Klammerelemente 121ʺʺ in dem Raumflugkörper 110 verstaut. Hierzu können die Klammerelemente 121ʺʺ entsprechend um den Drehpunkt 123ʺʺ verschwenkt werden.

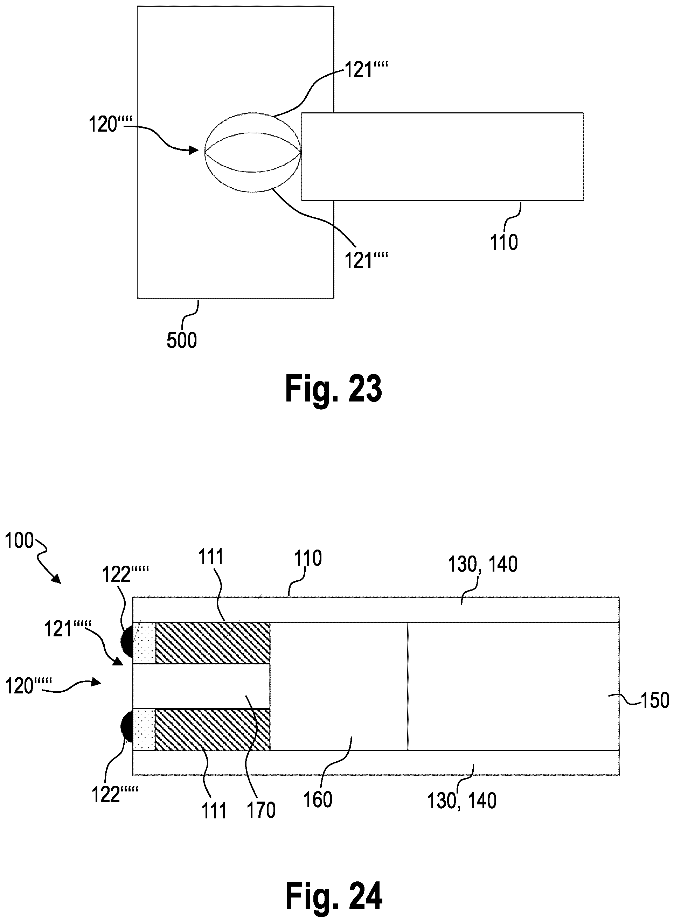

Fig. 23 zeigt den exemplarischen Effektor 120ʺʺ aus Fig. 19, Fig. 20, Fig. 21 und Fig. 22 in einer möglichen Verwendung. Nachdem sich die Vorrichtung 100 bzw. der Raumflugkörper 110 dem Zielobjekt 500 angenähert hat (siehe Fig. 19), wird der Klammermechanismus geschlossen, insbesondere durch Schließen der Klammerelemente 121"". Dadurch wird das Zielobjekt gegriffen und/oder geschnitten.

Fig. 24 zeigt in einer schematischen Draufsicht ein weiteres Ausführungsbeispiel des Effektors 120, der in diesem Ausführungsbeispiel zur besseren Übersichtlichkeit mit 120‴ʺ bezeichnet ist.

Demgemäß kann der Effektor 120‴ʺ einen Koppelabschnitt 121‴ʺ aufweisen. Der Koppelabschnitt 121‴ʺ kann dazu eingerichtet sein, das Zielobjekt 500 zu kontaktieren und mit diesem eine haftende, optional auch stoffschlüssige, Kopplung auszubilden. Beispielsweise kann der Koppelabschnitt 121""' zumindest teilweise flächig ausgeführt sein und daher auch als z.B. Haftfläche oder Klebefläche bezeichnet werden. Die haftende Verbindung kann beispielsweise durch ein Geckomaterial bewerkstelligt werden. Die stoffschlüssige Kopplung kann beispielsweise durch einen Klebstoff oder dergleichen bewerkstelligt werden. Die haftende und/oder stoffschlüssige Kopplung kann eine feste Verbindung zwischen dem Raumflugkörper 110 und/oder dem Effektor 120‴ʺ und dem Zielobjekt 500 ausbilden, d.h. an diesem ankoppeln. Durch den Antrieb 150 kann der Raumflugkörper 110 das Zielobjekt 500 in einen Orbit bewegen, der zum Absturz der miteinander verbundenen Objekte führt.

Beispielsweise kann der Klebstoff in wenigstens eine Kapsel 122‴ʺ gefüllt sein, die beispielsweise durch Druck beim Kontaktieren des Zielobjekts zum Platzen gebracht werden können. Der Raumflugkörper 110 kann sich auf dem Zielorbit dem Zielobjekt 500 annähern. Zum Zeitpunkt des Aufschlagens des Raumflugkörpers 110, kann die Geschwindigkeitsdifferenz zwischen dem Zielobjekt 500 und dem Raumflugkörper 110 so gering gewählt werden, dass ein Durschlagen des Zielobjekts 500 verhindert wird, aber groß genug, um die auf dem Koppelabschnitt 121‴ʺ angeordneten und mit Klebstoff gefüllten Kapseln 122‴ʺ zum Platzen zu bringen. Nach dem Platzen kann der Klebstoff den Zwischenspalt füllen und ggf. aushärten, z.B. unter kontinuierlichem Druck des mit seinem Antrieb 150 schiebenden Raumflugkörpers 110. Dadurch kann der Raumflugkörper 110 und/oder Effektor 120‴ʺ an das Zielobjekt 500 ankoppeln.

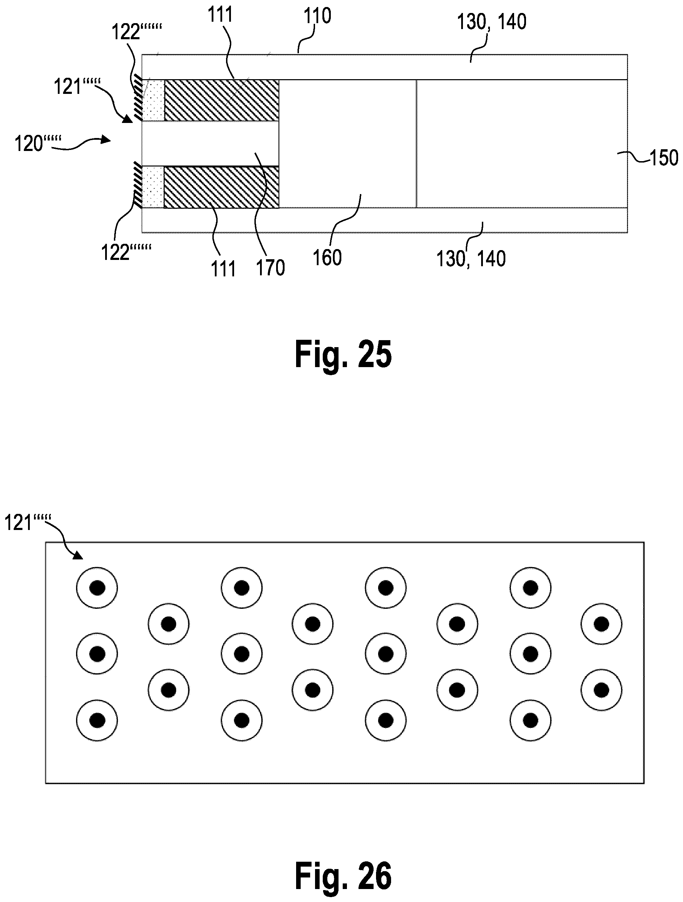

Fig. 25 zeigt die Vorrichtung 100 bzw. den Raumflugkörper 110 und den Effektor 120‴ʺ aus Fig. 24 in einer Ausgestaltung mit dem oben erwähnten Geckomaterial 122""". Dementsprechend weist der Koppelabschnitt 121‴ʺ das Geckomaterial 122‴‴ auf. Das Geckomaterial 122""" kann dazu eingerichtet sein, an dem Zielobjekt 500 zu haften bzw. eine Haftwirkung zwischen dem Effektor und dem Zielobjekt 500 auszubilden. Unter einem Geckomaterial kann ein Haftmittel verstanden werden, das auf einer Anpassung der Füße eines Geckos basiert. Das Geckomaterial kann auch als ein Trockenkleber verstanden werden. Beispielsweise kann das Geckomaterial Nanostrukturen, wie etwa Nanoröhrchen oder dergleichen, aufweisen, die die Wirkung der Füße eines Geckos nachahmen. Das Geckomaterial 122""" kann beispielsweise auch den Effektor 120‴ʺ oder einen Teil davon umlaufen. Beispielsweise kann das Geckomaterial 122""" einen Suchkopf umlaufen, um dessen Sichtfeld möglichst wenig einzuschränken. Die Haftverbindung zwischen dem Effektor und dem Zielobjekt dann durch Überwinden der Haftkraft wieder aufgehoben werden.

Fig. 26 eine Vorderansicht des Koppelabschnitt 121‴ʺ gemäß einem Ausführungsbeispiel. Gezeigt ist die Vorrichtung 100 bzw. der Raumflugkörper 110 mit dem Effektor 120‴ʺ, der hier eine Anzahl von an dem Koppelabschnitt 121‴ʺ ausgebildeten Vertiefungen aufweist. Wie oben erwähnt, kann der Koppelabschnitt 121‴ʺ auch als Haftfläche oder Klebefläche bezeichnet werden. Die jeweilige Vertiefung kann eine Öffnung aufweisen Der oben erwähnte Klebstoff kann in der jeweiligen Vertiefung angeordnet sein und durch die Öffnungen heraustreten. Der Klebstoff kann auch ein Zweikomponentenklebstoff sein, der in einer Vorkammer gemischt wird und dann durch die jeweilige Öffnung heraustreten kann. Zum schnelleren Aushärten des Klebstoffs kann der Koppelabschnitt 121‴ʺ mittels einer Heizeinrichtung beheizbar sein.

In zumindest einigen Ausführungsbeispielen kann der Effektor 120 und/oder der Effektor 120‴ʺ ferner wenigstens einen Manipulationsmechanismus aufweisen, der dazu eingerichtet ist, das kontaktierte Zielobjekt 500 zu manipulieren. Beispielsweise kann mit oder nach Ausbilden der Klebeverbindung wenigstens eine der folgenden Manipulationen des Zielobjekts 500 ausgeführt werden: Festschrauben am Zielobjekt 500, Anbohren am oder des Zielobjekts 500, um beispielsweise einen Gefechtskopf im Zielobjekt 500 zu platzieren, Verändern der Rotationsgeschwindigkeit des Zielobjekts, 500 Verändern des Orbits des Zielobjekts 500, um dieses zum Absturz zu bringen. Die dafür evtl. zusätzlich erforderlichen Komponenten, z. B. Bohrer oder dergleichen, können beispielsweise in einem für missionsspezifische Nutzlast 111 reservierten Volumen des Raumflugkörpers 110 untergebracht sein. Je nach eingeschlagener Maßnahme kann das Zielobjekt 500 temporär oder permanent von seiner Missionserfüllung abgehalten werden.

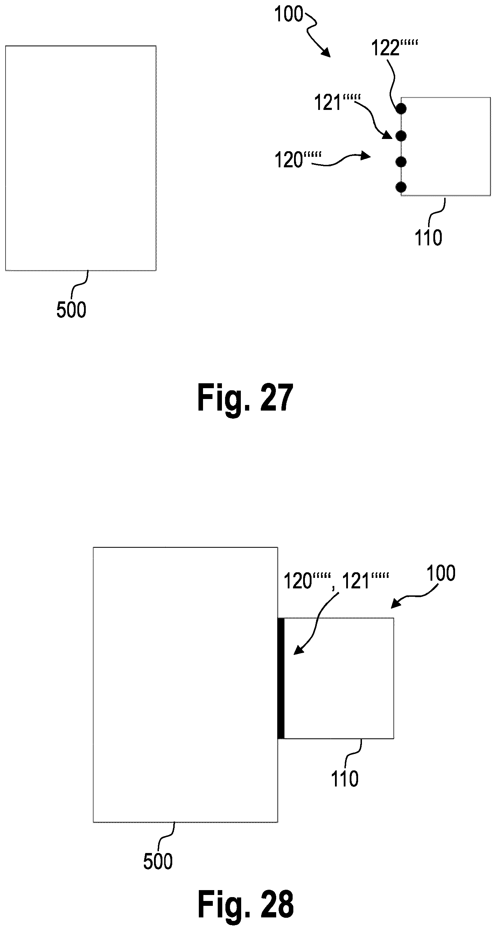

Fig. 27 und Fig. 28 zeigen die Vorrichtung 100 bzw. den Raumflugkörper 110 und den Effektor 120‴ʺ aus Fig. 24, Fig. 25 oder Fig. 26 in einer möglichen Verwendung. In Fig. 27 nähert sich die Vorrichtung 100 bzw. Raumflugkörper 110 und der Effektor 120‴ʺ mit dem Koppelabschnitt 121‴ʺ und den Kapseln 122‴ʺ dem Zielobjekt 500. In Fig. 28 sind die Kapseln 122‴ʺ geplatzt und die formschlüssige Verbindung zwischen dem Koppelabschnitt 121""' und dem Zielobjekt 500 ausgebildet. Zumindest ähnlich funktioniert das Koppeln mittels des Geckomaterials und/oder des in den Vertiefungen gemäß Fig. 26 angeordneten Klebstoffs.

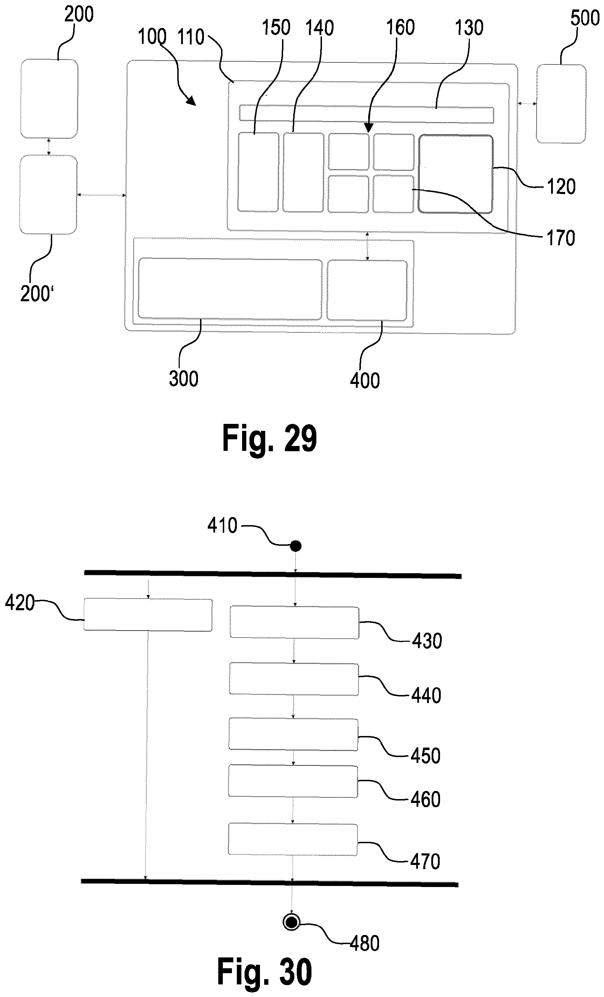

Fig. 29 zeigt in einem Blockdiagramm ein exemplarisches System 10 zum Entgegenwirken gegen ein Zielobjekt im Weltraum.

Das System 10 weist die Vorrichtung 100 auf, die gemäß einem oder mehreren der hierin beschriebenen Ausführungsbeispielen ausgebildet sein kann. Dementsprechend kann der Effektor 120 gemäß einem oder mehreren der hierin beschriebenen Effektoren 120', 120", 120'", 120ʺʺ und 120‴ʺ ausgebildet sein.

Das System 10 weist zudem wenigstens eine Erfassungseinrichtung 200, 200' auf, die dazu eingerichtet ist, das Zielobjekt zum Erzeugen von Zieldaten zu erfassen. Die wenigstens eine Erfassungseinrichtung 200, wie etwa ein Sensor, ein Sensornetzwerk oder dergleichen, kann dazu eingerichtet sein, die Zieldaten basierend auf Beobachtungen aus dem Weltraum und/oder von der Erde aus zu erzeugen. Beispielsweise können die Zieldaten von einem oder unter Verwendung eines Weltraumüberwachungssystems, z.B. eines Space Situational Awareness (SSA)-Systems oder dergleichen, erzeugt und/oder bereitgestellt werden, wobei dies hierin nicht beschränkt ist. Alternativ oder zusätzlich, können die Zieldaten auch von einem oder unter Verwendung eines Führungs- und Kontrollsystem, z.B. C2 (Command & Control) erzeugt und/oder bereitgestellt werden. Die Zieldaten können beispielsweise auch einen Treffpunkt, Abfangpunkt oder dergleichen des Raumflugkörpers mit dem Zielobjekt 500 angeben, der beispielsweise basierend auf Daten der Erfassungseinrichtung, z.B. auch unter Einbeziehung astronomischen Wissens, berechnet werden kann.

In zumindest einigen Ausführungsbeispielen kann das System 10 ferner eine Verbringungsvorrichtung 300 zum Verbringen der Vorrichtung 100 aufweisen. Zudem kann das System eine Startvorrichtung 400 zum Starten des Raumflugkörpers 110 aufweisen. Die Startvorrichtung 400 und/oder die Verbringungsvorrichtung 300 kann dazu eingerichtet sein, die Vorrichtung 100 und/oder den Raumflugkörper 110 von der Erde aus hin zu dem Zielobjekt 500 zu starten.

Beispielsweise kann der wenigstens eine Raumflugkörper 110 in der Verbringungsvorrichtung 300 durch die Startvorrichtung 400 integriert werden. Die Startvorrichtung 400 kann eine mechanische und/oder elektrische Schnittstelle und/oder eine Datenschnittstelle zwischen der Verbringungsvorrichtung und dem Raumflugkörper 110 ausbilden. Optional kann vorgesehen sein, dass vor dem Start der Raumflugkörper 110 von der Verbringungsvorrichtung 300, mit Energie versorgt wird. Die Startvorrichtung 400 kann dazu ausgelegt sein, dass der Suchkopf 170 des Raumflugkörpers 110 ein Sichtfeld aus der Startvorrichtung 400 heraus hat. Dadurch kann der Suchkopf 170 seine Daten, z.B. Bilddaten usw., an z.B. das C2 System zurückmelden, um Bedrohungen in Suchkopfreichweite zu erkennen und zu identifizieren. Es ist auch möglich, den Suchkopf 170 bereits vor dem Start auf das Ziel aufzuschalten (Lock-on-before-launch). Die mechanische Schnittstelle kann den Raumflugkörper 110 während der Verbringung bis zum Start arretieren. Beim Start kann die Arretierung, z.B. signalgesteuert, gelöst werden. Der Raumflugkörper 110 kann dann mittels seines Antriebs 150 aus der Startvorrichtung 400 heraus beschleunigt werden.

Weiter beispielweise kann das System 10 ferner einen Satelliten aufweisen. Der Satellit kann dazu eingerichtet sein, den Raumflugkörper 110 zu tragen, wobei der Raumflugkörper 110 von dem Satelliten aus hin zu dem Zielobjekt 500 startbar ist. Hierbei kann der Raumflugkörper 110 und/oder der Effektor 120 als Selbstverteidigungssystem für den Satellit dienen. Der Raumflugkörper 110 und/oder der Effektor 120 kann dort warten, bis das Zielobjekt 500 in Reichweite ist und kann dann von dem Satelliten aus gestartet werden.

Fig. 30 illustriert in einem Flussdiagramm mögliche Aktivitäten bezogen auf die Vorrichtung 100 und/oder den Raumflugkörper 110 in der Startvorrichtung 400.

Beginnend bei Block 410 befindet sich die Vorrichtung 100 und/oder der Raumflugkörper 110 in der Startvorrichtung 400. Block 420 gibt an, dass währenddessen der wenigstens eine Suchkopf 170 entsprechende Daten, z.B. auch Bilddaten, liefert, z.B. an das C2-System. Bei Block 430 gibt ein Bediener, z.B. ein Bediener des C2-Systems, einen Bekämpfungsbefehl. Gemäß Block 440 kann die bordeigene Energieversorgung des Raumflugkörpers 110 aktiviert werden. Bei Block 450 kann eine Arretierung für den Raumflugkörper 110 in der Startvorrichtung 400 deaktiviert, z.B. gelöst, werden. Gemäß Block 460 wird der Raumflugkörper 110 mittels seines Antriebs 150 beschleunigt. Bei Block 470 etabliert der Raumflugkörper 110 seine Kommunikation. Bei Block 480 befindet sich der Raumflugkörper 110 außerhalb der Startvorrichtung 100.

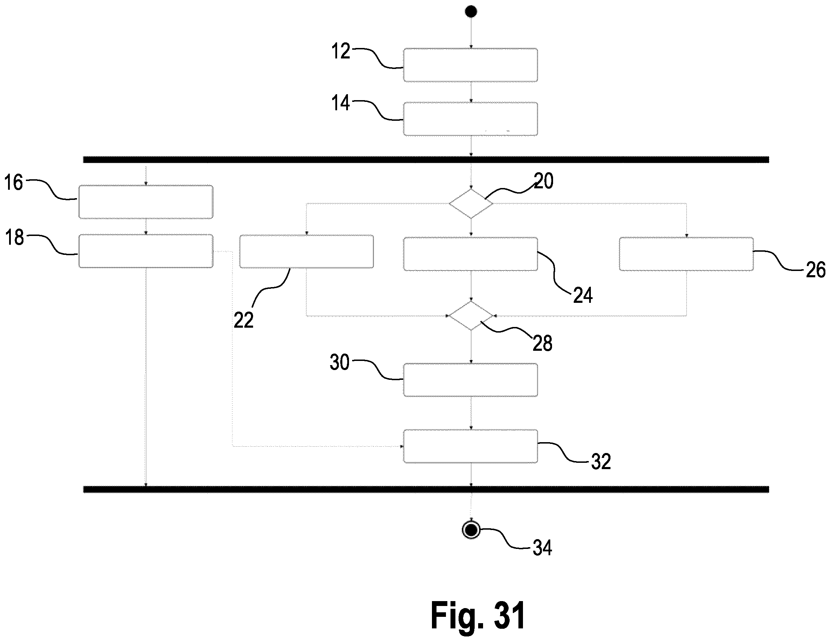

Fig. 31 illustriert in einem Flussdiagramm einen möglichen Ablauf bei Verwendung des Systems 10.

Beginnend bei Block 12 wird mittels der wenigstens einen Erfassungsvorrichtung 200, z.B. einem Space Situational Awareness (SSA)-Systems und/oder unter einem Führungs- und Kontrollsystem, z.B. C2 (Command & Control), eine mögliche Bedrohung durch das Zielobjekt 500 erkannt. Bei Block 14 gibt ein Bediener, z.B. ein Bediener des C2-Systems, einen Bekämpfungsbefehl. Gemäß Block 16 kann die wenigstens eine Erfassungsvorrichtung 200, 200' und/oder der wenigstens eine Suchkopf 170 das Zielobjekt 500 verfolgen. Gemäß Block 18 können Zielupdates erzeugt und/oder erhalten werden.

Block 20 deutet an, dass es verschiedene Anwendungs- und/oder Einsatzszenarien für die Vorrichtung 100 geben kann, wobei die Blöcke 22, 24 und 26 drei verschiedene Anwendungs- und/oder Einsatzszenarien angeben. Gemäß Block 22 kann der Raumflugkörper 110 von der Erde aus hin zu dem Zielobjekt 500 gestartet und/oder verbracht werden. Hierzu kann die Startvorrichtung 400 und/oder Verbringungsvorrichtung 300 vorgesehen sein, die zum Start und/oder Verbringen des Raumflugkörpers von Land, Wasser oder Luft eingerichtet sein kann. Damit kann der Raumflugkörper 110 bei Bedarf, z.B. bei Bestimmung des Zielobjekts als potenzielle Bedrohung, von der Erde aus gestartet und/oder verbracht werden. Gemäß Block 24 kann der Raumflugkörper 110 von einem Satelliten getragen und von dort aus hin zu dem Zielobjekt 500 gestartet werden. Beispielsweise können ein oder mehrere Raumflugkörper 110 und/oder Effektoren 120 an oder auf dem zu schützenden Satelliten installiert sein. Dabei können der Satellit und der Raumflugkörper 110 und/oder der Effektor 120 gemeinsam gestartet bzw. in den Weltraum verbracht werden. Dies bildet ein Selbstverteidigungssystem für den Satellit, wobei das Prinzip auch auf andere Weltrauminfrastruktur anwendbar ist. Gemäß Block 26 kann der Raumflugkörper 110 als dedizierter Satellit im Weltraum vorgehalten und von dort aus dem Zielobjekt 500 angenähert werden. Beispielsweise kann der Raumflugkörper 110 und/oder der Effektor 120 bereits in den Weltraum verbracht, bevor eine Bedrohung erkennbar ist bzw. ein konkreter Bedarf besteht. Dies kann mittels eines dedizierten Satelliten bewerkstelligt werden, der auch dazu eingerichtet sein kann, seine Bahn ggf. auch mehrfach zu wechseln oder mehrere Objekte auf einem Orbit zu schützen. Dies bildet eine Wachfunktion.

Bei Block 28 befindet sich das Zielobjekt 500 in Reichweite der Vorrichtung 100 und/oder des Raumflugkörpers 110. Bei Block 30 wird der Raumflugkörper 110 gestartet. Bei Block 32 nähert sich der Raumflugkörper 110 dem Zielobjekt 500 an, insbesondere auf Basis der Zieldaten. Bei Block 34 befindet sich der Raumflugkörper 110 in Reichweite zu dem Zielobjekt 500, um den Effektor 120 einzusetzen.

Die oben beschriebenen Aspekte, Ausgestaltungen, Varianten und Beispiele können miteinander kombiniert werden, ohne dass dies explizit beschrieben ist. Jede der beschriebenen Ausgestaltungsvarianten und jedes Beispiel sind somit optional zu jedem der Aspekte, Ausgestaltungen, Varianten und Beispielen oder bereits Kombinationen davon zu sehen. Die vorliegende Offenbarung ist somit nicht auf die einzelnen Ausgestaltungen und Ausgestaltungsvarianten in der beschriebenen Reihenfolge oder einer bestimmten Kombination der Aspekte und Ausgestaltungsvarianten beschränkt.

### BEZUGSZEICHENLISTE

- 10: System
- 12-34: Block von Flussdiagramm
- 100: Vorrichtung
- 110: Raumflugkörper
- 120: Effektor
- 121: textiles Flächengebilde, z.B. Netz
- 122: Gewicht
- 123: Kordel
- 124: Startrohr
- 125: Riegel
- 126: Winde
- 127: Gasgenerator
- 120': Effektor
- 121': Schleppnetz
- 122': Ausleger
- 123': Gewicht
- 124': Kordel
- 125': Winde
- 120": Effektor
- 121": biegeschlaffes, langgestrecktes Element, z.B. Seil
- 122": Haken
- 123": Haken
- 124": Riegel
- 125": Gewicht
- 126": Harpune
- 127": Startrohr
- 128": Gasgenerator
- 120‴: Effektor
- 121‴: speerförmiges Element
- 122‴: Stopper
- 123"': Drehpunkt
- 120ʺʺ: Effektor
- 121"": Klammerelement
- 122ʺʺ: Klammermechanismus
- 123ʺʺ: Drehpunkt
- 124ʺʺ: Gasgenerator
- 120ʺʺ′: Effektor
- 121ʺʺ′: Koppelabschnitt
- 122ʺʺ′: Kapsel
- 122ʺʺʺ: Geckomaterial
- 130: Struktur
- 140: Lagekontrollsystem, z.B. Attitude Determination and Control System (ACS)
- 150: Antrieb
- 160: Mittel
- 170: Suchkopf
- 200: Erfassungseinrichtung
- 200': Erfassungseinrichtung
- 300: Verbringungsvorrichtung
- 400: Startvorrichtung
- 410-480: Block von Flussdiagramm
- 500: Zielobjekt

## Patentansprüche

1. Vorrichtung (100) zum Entgegenwirken gegen ein Zielobjekt (500) im Weltraum, aufweisend wenigstens einen Raumflugkörper (110), der dazu eingerichtet ist, sich basierend auf Zieldaten dem Zielobjekt (500) anzunähern, und einen Effektor (120, 120', 120", 120‴, 120ʺʺ, 120ʺʺ′), der von dem Raumflugkörper (110) tragbar oder getragen ist und dazu eingerichtet ist, von dem Raumflugkörper (110) aus das Zielobjekt (500) einzufangen oder an das Zielobjekt (500) anzukoppeln.

2. Vorrichtung nach Anspruch 1, wobei der Raumflugkörper (110) einen Antrieb aufweist, der dazu eingerichtet ist, den Raumflugkörper (110) bei eingefangenem Zielobjekt (500) oder bei Ankopplung an das Zielobjekt (500) zu bewegen, insbesondere von einem ersten Orbit zu einem dazu unterschiedlichen, zweiten Orbit.

3. Vorrichtung nach Anspruch 1 oder 2, wobei der Effektor (120, 120', 120", 120‴, 120ʺʺ, 120ʺʺ′) auch bei eingefangenem Zielobjekt (500) oder bei Ankopplung an das Zielobjekt (500) mit dem Raumflugkörper (110) gekoppelt ist oder gekoppelt bleibt.

4. Vorrichtung nach einem der vorhergehenden Ansprüche, wobei der Effektor (120, 120', 120") von dem Raumflugkörper (110) aus hin zu dem Zielobjekt (500) ausbringbar ist.

5. Vorrichtung nach einem der vorhergehenden Ansprüche, wobei der Effektor (120, 120', 120") ein Flächengebilde (121'), aufweist, das dazu eingerichtet ist, das Zielobjekt (500) zumindest teilweise zu umschließen.

6. Vorrichtung nach einem der vorhergehenden Ansprüche, wobei der Effektor (120, 120', 120") ein Netz (121'), insbesondere ein Wurfnetz oder ein Schleppnetz, aufweist.

7. Vorrichtung nach Anspruch 6, wobei der Effektor (120) ein Wurfnetz (121') aufweist, das mittels eines Auswurfmechanismus hin zu dem Ziel auswerfbar und dort mittels Seilzugs zusammenziehbar ist.

8. Vorrichtung nach Anspruch 6, wobei der Effektor (120) ein Schleppnetz (121') aufweist, das mittels eines Auslegers von dem Raumflugkörper (110) beabstandbar und/oder aufspannbar ist.

9. Vorrichtung nach einem der vorhergehenden Ansprüche, wobei der Effektor ein biegeschlaffes, langgestrecktes Element (121") aufweist, das um das Zielobjekt (500) herum wickelbar ist.

10. Vorrichtung nach Anspruch 9, wobei das biegeschlaffe, langgestreckte Element (121") mittels eines Rückholmechanismus zu dem Raumflugkörper (110) hin rückholbar ist.

11. Vorrichtung nach einem der vorhergehenden Ansprüche, wobei der Effektor (120, 120‴) wenigstens ein speerförmiges Element (121‴) aufweist, das dazu eingerichtet ist, eine kraftschlüssige und/oder formschlüssige Kopplung mit dem Zielobjekt (500) auszubilden.

12. Vorrichtung nach einem der vorhergehenden Ansprüche, wobei der Effektor (120, 120ʺʺ), einen Klammermechanismus (122"") aufweist, der dazu eingerichtet ist, das Zielobjekt (500) zumindest teilweise zu umschließen, um dieses zu halten, und/oder das Zielobjekt (500) zu schneiden.

13. Vorrichtung nach einem der vorhergehenden Ansprüche, wobei der Effektor (120, 120ʺʺ) einen Koppelabschnitt (121"") aufweist, der dazu eingerichtet ist, das Zielobjekt (500) zu kontaktieren und mit diesem eine haftende oder stoffschlüssige Kopplung auszubilden.

14. Vorrichtung nach Anspruch 13, wobei der Koppelabschnitt (121"") ein Geckomaterial (122ʺʺʺ) aufweist, das dazu eingerichtet ist, an dem Zielobjekt (500) zu haften.

15. Vorrichtung nach Anspruch 13 oder 14, wobei der Effektor (120, 120ʺʺ) ferner wenigstens einen Manipulationsmechanismus aufweist, der dazu eingerichtet ist, das kontaktierte Zielobjekt (500) zu manipulieren.

16. Vorrichtung nach einem der vorhergehenden Ansprüche, wobei der Raumflugkörper (110) wenigstens einen Suchkopf (170) aufweist und dazu eingerichtet ist, sich mittels des Suchkopfes (170) zielgeführt an das Zielobjekt (500) anzunähern.

17. Verwendung einer Vorrichtung (100) zum Entgegenwirken gegen ein Zielobjekt (500) im Weltraum und/oder Unschädlichmachen eines Zielobjekts im Weltraum, wobei ein Raumflugkörper, der einen Effektor (120, 120', 120", 120‴, 120"", 120ʺʺ′) trägt, basierend auf einem Zielvorgabesignal dem Zielobjekt (500) angenähert wird und mittels des Effektors (120, 120', 120", 120"', 120ʺʺ, 120ʺʺ′) von dem Raumflugkörper (110) aus das Zielobjekt (500) eingefangen oder an das Zielobjekt (500) angekoppelt wird.

18. System (10) zum Entgegenwirken gegen ein Zielobjekt (500) im Weltraum, aufweisend:
wenigstens eine Erfassungseinrichtung (200, 200'), die dazu eingerichtet ist, das Zielobjekt (500) zum Erzeugen von Zieldaten zu erfassen,
wenigstens einen Raumflugkörper, der dazu eingerichtet ist, sich basierend auf Zieldaten dem Zielobjekt (500) anzunähern,
einen Effektor (120, 120', 120", 120‴, 120ʺʺ, 120ʺʺ′), der von dem Raumflugkörper (110) tragbar oder getragen ist und dazu eingerichtet ist, von dem Raumflugkörper (110) aus das Zielobjekt (500) einzufangen oder an das Zielobjekt (500) anzukoppeln.
